# EUROPÄISCHE PATENTANMELDUNG

(11) **EP 3 578 364 A1**
(43) Veröffentlichungstag der Anmeldung: **11.12.2019**
(21) Anmeldenummer: 18176759.1
(22) Anmeldetag: 08.06.2018
(51) Int. Cl.: B33Y 10/00, B22F 3/105, B33Y 30/00, B33Y 40/00, B29C 64/153, B29C 64/30, B29C 64/245, B29C 64/268

(54) **VORRICHTUNG UND VERFAHREN ZUR HERSTELLUNG DREIDIMENSIONALER STRUKTUREN**

(71) Anmelder: LSS Laser-Sinter-Service GmbH, 59439 Holzwickede (DE)
(72) Erfinder: Hanning, Hermann, 32758 Detmold (DE)
(74) Vertreter: Von Rohr Patentanwälte Partnerschaft mbB

(57) **Zusammenfassung**

Substratplatte (2) zur Verwendung in der additiven Fertigung, wobei die Oberfläche der Substratplatte (2), auf welcher ein Bauteil (10) aufgebaut wird, insbesondere zumindest bereichsweise strukturiert ist.

## Beschreibung

Die vorliegende Erfindung betrifft das technische Gebiet der generativen Fertigungsverfahren bzw. der additiven Fertigung, insbesondere die Herstellung von dreidimensionalen Strukturen aus Polymeren oder Metallen mittels selektiver Bestrahlung mit elektromagnetischer Strahlung.

Insbesondere betrifft die vorliegende Erfindung eine Substratplatte zur Verwendung in der additiven Fertigung.

Weiterhin betrifft die vorliegende Erfindung eine Bauplatte, welche eine Substratplatte und eine Grundplatte aufweist, zur Verwendung in der additiven Fertigung und eine entsprechende Grundplatte. Darüber hinaus betrifft die vorliegende Erfindung eine Vorrichtung zur additiven Fertigung von dreidimensionalen Strukturen, welche eine Substratplatte und/oder eine Grundplatte aufweist.

Weiterhin ein Verfahren zur Herstellung dreidimensionaler Strukturen mittels additiver Fertigung unter Verwendung der Substratplatte.

Generative Fertigungsverfahren, welche auch unter der Bezeichnung additive Fertigung bzw. *Additive Manufacturing* oder *Additive Layer Manufacturing* (ALM) bekannt sind, sind Verfahren zur schichtweisen Fertigung von Bauteilen aus Metall oder Kunststoffen. Die Fertigung erfolgt im Falle von Kunststoffen üblicherweise aus Pulvern, Flüssigkeiten oder Filamenten mittels chemischer oder physikalischer Prozesse und im Fall von Metallen aus pulverförmigen Ausgangsstoffen.

Generative Fertigungsverfahren wurden in ihrer Anfangszeit unter den Begriffen *Rapid Prototyping* und 3D-Druck zusammengefasst. Im Laufe der Zeit wurden die Verfahren jedoch so differenziert, dass *Rapid Prototyping* und 3D-Druck nunmehr nur lediglich spezielle Verfahrensarten und nicht mehr die gesamte Gattung bezeichnen. Zu den bekanntesten generativen Fertigungsverfahren gehören die Stereolithografie, das selektive Laserschmelzen (SLM Selective Laser Melting), das selektive Lasersintern (SLS) und das *Binder Jetting.* Während die Stereolithografie sowie das *Binder Jetting* auf reaktive Polymermaterialen beschränkt sind und die Gegenwart von flüssigen Edukten oder Vernetzern benötigen, sind das selektive Laserschmelzen und das selektive Lasersintern eng verwandte Pulverbettverfahren, bei welchen die Ausgangsstoffe in Form von Pulvern vorgelegt werden. Sowohl beim Laserschmelzen als auch beim Lasersintern wird üblicherweise eine dünne Schicht eines Pulvermaterials vorgelegt und anschließend durch Laserstrahlung mit hoher Ortsauflösung aufgeschmolzen bzw. angeschmolzen und versintert. Das selektive Laserschmelzen wird dabei üblicherweise bei der additiven Fertigung von Metallbauteilen verwendet, während das selektive Lasersintern bei der Herstellung von Bauteilen aus thermoplastischen Kunststoffen Anwendung findet.

Das selektive Lasersintern ist insbesondere bei der Herstellung von Bauteilen aus thermoplastischen Kunststoffen, beispielsweise aus Polyamid, von herausragender Bedeutung, da Bauteile schnell und mit hoher Präzision hergestellt werden können und nicht verbrauchtes Pulver ohne Weiteres in weiteren Bauprozessen eingesetzt werden kann.

Bei der Herstellung von dreidimensionalen Strukturen mittels selektiven Lasersinterns wird nach dem Stand der Technik eine dünne Schicht Kunststoffpulver auf ein höhenverfahrbares Baufeld aufgetragen. Die Kunststoffpulverschicht wird dann mittels einer über dem Baufeld liegenden Baufeldheizung bis knapp unter den Schmelzpunkt erwärmt und anschließend selektiv mittels eines ablenkbaren Laserstrahls aufgeschmolzen. Nach dem Absenken des Baufeldes wird eine neue Pulverschicht aufgebracht und der Prozess wiederholt. Mit dieser Verfahrensweise lassen sich typischerweise semikristalline Kunststoffmaterialien mit einer großen Temperaturdifferenz zwischen Schmelztemperatur und Rekristallisationstemperatur verarbeiten; insbesondere thermoplastische Polyamide, wie beispielsweise das Polyamid-12, sind geeignete Materialien für das Lasersintern, da sie ein großes Verarbeitungstemperaturfenster, d. h. eine große Differenz zwischen Schmelztemperatur und Rekristallisationstemperatur aufweisen.

Der Nachteil der Verwendung von Polyamiden, insbesondere von Polyamid-12, ist jedoch, dass ihre mechanische Widerstandsfähigkeit sowie die Belastbarkeit bei hohen Temperaturen, sehr gering ist, was die Anwendungsmöglichkeiten der hergestellten Bauteile begrenzt. Da thermoplastische Polyamide jedoch die am besten zu verarbeitenden Werkstoffe darstellen, bleiben die Anwendungsmöglichkeiten des selektiven Laserschmelzens sowie des selektiven Lasersinterns in der Praxis weiter hinter den theoretischen Möglichkeiten zurück.

Insbesondere ist die Verarbeitung sogenannter Hochleistungskunststoffe bzw. Hochleistungspolymere, beispielsweise auf Basis von Polyetheretherketonen (PEEK), Polyaryletherketonen (PAEK) oder Acrylnitril-Butadien-Styrol (ABS), in Pulverbettverfahren, wie beispielsweise dem selektiven Laserschmelzen oder dem selektiven Lasersintern nur schwierig möglich, obwohl diese Materialien aufgrund ihrer hohen mechanischen Belastbarkeit und auch ihrer äußerst guten thermischen Widerstandsfähigkeit für eine Vielzahl von Anwendungen, insbesondere im medizinischen Bereich oder in der Luftfahrt von besonderem Interesse sind.

Die Verarbeitung von Hochleistungspolymeren mit selektivem Laserschmelzen oder selektivem Lasersintern ist problematisch, da die Schmelz- und Rekristallisationstemperaturen der Polymere nur wenig beabstandet ist. So liegt beispielsweise im Falle des PEEK die Rekristallisationstemperatur weniger als 1°C unterhalb der Schmelztemperatur von ca. 375 °C. Während in einem klassischen Lasersinterprozess das Pulverbett auf eine Temperatur knapp unterhalb des Schmelzpunktes, jedoch oberhalb der Rekristallisationstemperatur aufgeheizt wird, liegt die Temperatur des Pulverbettes bei der Verarbeitung von Hochleistungspolymeren immer noch unterhalb der Rekristallisationstemperatur, so dass beim Erstarren der Polymerschmelze mechanische Belastungen sowie Verwerfungen und Spannungen auftreten und Objekte mit der gewünschten Geometrie nicht oder nur schwer zu erhalten sind.

Hinzu kommt, dass die Lasersinter- und Laserschmelzprozesse von Hochleistungspolymeren üblicherweise relativ langwierig sind: So sind beispielsweise Fortschrittsraten in der Fertigung auf Standard-Lasersinteranlagen von 0,1 kg/h üblich. Dies bedeutet, dass selbst die Herstellung relativ kleiner Bauteile mehrere Stunden benötigt, was vor dem Hintergrund der thermischen Alterung bzw. des thermischoxidativen Abbaus der Polymere problematisch ist. So müsste für ein klassisches Lasersinterverfahren mit dem Polymer PEEK das Pulverbett auf Temperaturen von ca. 340 bis 350 °C aufgeheizt werden, was problematisch ist, da die thermische Alterung und der thermisch-oxidative Abbau von PEEK bei Temperaturen ab 260 °C beginnt. Dies führt dazu, dass nicht versintertes Polymerpulver nicht für weitere Bauvorgänge verwendet werden kann. Bei Preisen von bis zu 300,-- €/kg für Hochleistungspolymere sind daher klassische Lasersinterverfahren oder Laserschmelzverfahren an Hochleistungspolymeren wirtschaftlich nicht sinnvoll durchzuführen.

In der WO 2012/160344 A1 wird ein Verfahren zur Herstellung dreidimensionaler Strukturen aus Hochleistungspolymeren mittels selektiven Lasersinterns beschrieben, welches mit deutlich geringen Vorheiztemperaturen, insbesondere Baufeldtemperaturen, durchgeführt werden kann. Die Prozesstemperaturen bei der Verarbeitung von PEEK liegen hier üblicherweise unterhalb von 200 °C, so dass nicht verwendetes Ausgangsmaterial ohne Weiteres recycelt und für weitere Bauvorgänge eingesetzt werden kann. Die Baufeldtemperatur wird dabei so gehalten, dass sie deutlich unterhalb sowohl der Schmelztemperatur als auch der Rekristallisationstemperatur liegt und auch unterhalb der Temperatur, bei welcher der thermisch-oxidative Abbau beginnt, jedoch oberhalb der Glasübergangstemperatur.

Das in der WO 2012/160344 A1 beschriebene Verfahren zur Herstellung von dreidimensionalen Objekten aus Hochleistungspolymeren mittels selektiven Lasersinters wird in T. Niino und T. Uehara, "Low temperature selective laser melting of high temperature plastic powder", Annual International Symposium of Solid Free form Fabrication, Seiten 866 ff., 2015, weiter untersucht.

Die beschriebene Herstellung von dreidimensionalen Strukturen aus Hochleistungspolymeren bei vergleichsweise tiefen Baufeldtemperaturen von 170 bis 250 °C wird durch die Verwendung von Substratplatten möglich, auf welchen die dreidimensionalen Strukturen aufgebaut werden. Die Verbindung von Substratplatte und dreidimensionaler Struktur sowie ergänzend von Stützstrukturen ermöglicht die Durchführung des Verfahren bei deutlich geringeren Vorheiztemperaturen bzw. Baufeldtemperaturen als in klassischen Laser-Sinterverfahren.

Hierdurch wird es möglich, auch Hochleistungspolymere zu verarbeiten und gleichzeitig die gewünschte Geometrie der Bauteile mit hoher Präzision zu gewährleisten. Nach Beendigung des Bauprozesses werden die Stützstrukturen entfernt und das fertige Bauteil von der Substratplatte gelöst. Derzeit gängige Substratplatten aus dem Stand der Technik sind üblicherweise aus einem Material gefertigt, das dem im Prozess zu verarbeitenden Werkstoff entspricht. Die Substratplatte wird üblicherweise aus einem Blockmaterial gefräst, ist mehrere Millimeter stark und kann in eine Laser-Sinteranlage nach Stand der Technik integriert werden. Die Substratplatte weist eine gewisse Planarität auf, da der Laserstrahl lediglich Eindringtiefen von wenigen Hundertstel Millimetern zusätzlich zur gewählten Schichtstärke des Pulvermaterials besitzt. Nur dort, wo der Laserstrahl seine Wirkung im Fokusbereich voll entfalten kann, wird das zu verarbeitende Material aufgeschmolzen und kann eine ausreichend feste Bindung zur Substratplatte aufgebaut werden. Mit derartigen Substratplatten ist es - wie oben ausgeführt - prinzipiell möglich, die gewünschte Geometrie von dreidimensionalen Strukturen auf Basis von Hochleistungspolymeren zu erhalten, jedoch ergeben sich in der Praxis eine Reihe von gravierenden Nachteilen.

Zum einen muss je nach Art des zu verarbeitenden Materials bei Prozessbeginn eine Oberflächentemperatur in der Bauebene von mindestens 100 °C herrschen, welche bei der Verarbeitung von Polymeren wie beispielsweise PEEK oder PAEK sogar 170 °C und mehr betragen muss. Da jedoch Kunststoffe schlechte Wärmeleitfähigkeiten besitzen ist es äußerst schwierig, die Platte homogen auf derart hohe Temperaturen aufzuheizen. Hierdurch ergeben sich in der Regel Verwerfungen auf der Oberfläche der Substratplatte und Verspannungen innerhalb der Substratplatte, welche nur schwer auszugleichen sind. Ein Ausgleich der Verwerfung und Verspannung, und eine hohe Planarität der Substratplatte sind jedoch notwendig, da andernfalls das verarbeitende Pulver nicht mit homogener Schichtdicke auf die Substratplatte aufgetragen werden kann, insbesondere wäre in Teilbereichen der Substratplatte die Schichtstärke des aufgetragenen Materials zu hoch und die aufzubauenden Stützstrukturen oder Bauteile könnte nicht im geplanten Umfang mit der Substratplatte verbunden werden. In der Folge lösen sich die Bauteile dann zu einem späteren Zeitpunkt mit hoher Wahrscheinlichkeit während des Bauprozesses von der Substratplatte und der Bauprozess muss abgebrochen werden.

Eine Aufgabe der vorliegenden Erfindung ist somit darin zu sehen, die mit dem Stand der Technik verbundenen Nachteile zu vermeiden, zumindest jedoch abzuschwächen.

Insbesondere ist eine Aufgabe der vorliegenden Erfindung darin zu sehen, eine verbesserte Substratplatte bereitzustellen, welche eine verbesserte Haftung von Bauteilen und Stützgeometrien bzw. Stützstrukturen an einer Substratplatte ermöglicht.

Darüber hinaus ist eine weitere Aufgabe der vorliegenden Erfindung darin zu sehen, eine Substratplatte bereitzustellen, welche gegenüber der Substratplatte des Standes der Technik eine verbesserte Planarität aufweist.

Wiederum weitere Aufgabe der vorliegenden Erfindung ist, eine verbesserte Substratplatte bereitzustellen, welche als vorgefertigtes Modul bzw. Einheit in eine Vorrichtung für die additive Fertigung, insbesondere in eine Vorrichtung zum Laserschmelzen oder zum Lasersintern, eingebracht werden kann.

Gegenstand der vorliegenden Erfindung gemäß einem ersten Aspekt der vorliegenden Erfindung ist somit eine Substratplatte nach Anspruch 1; weitere vorteilhafte Ausgestaltungen dieses Erfindungsaspektes sind Gegenstand der diesbezüglichen Unteransprüche.

Weiterer Gegenstand der vorliegenden Erfindung gemäß einem zweiten Aspekt der vorliegenden Erfindung ist die Verwendung einer Substratplatte nach Anspruch 8.

Wiederum weiterer Gegenstand der vorliegenden Erfindung gemäß einem dritten Aspekt der vorliegenden Erfindung ist eine Bauplatte nach Anspruch 9; weitere, vorteilhafte Ausgestaltungen dieses Erfindungsaspektes sind Gegenstand der diesbezüglichen Unteransprüche.

Weiterer Gegenstand der vorliegenden Erfindung gemäß einem vierten Aspekt der vorliegenden Erfindung ist die Verwendung einer Bauplatte nach Anspruch 12.

Wiederum weiterer Gegenstand der vorliegenden Erfindung gemäß einem fünften Aspekt der vorliegenden Erfindung - ist eine Grundplatte nach Anspruch 13.

Wiederum weiterer Gegenstand der vorliegenden Erfindung gemäß einem sechsten Aspekt der vorliegenden Erfindung ist eine Vorrichtung zur additiven Fertigung von Objekten aus Metall oder Kunststoff nach Anspruch 14.

Schließlich ist wiederum weiterer Gegenstand der vorliegenden Erfindung - gemäß einem siebten Aspekt der vorliegenden Erfindung ein Verfahren zur Herstellung dreidimensionaler Objekte mittels additiver Fertigung nach Anspruch 15; weitere, vorteilhafte Ausgestaltungen dieses Erfindungsaspektes sind Gegenstand der diesbezüglichen Unteransprüche.

Es versteht sich von selbst, dass Besonderheiten, Merkmale, und Ausführungsformen sowie Vorteile oder dergleichen, welche nachfolgend zu Zwecken der Vermeidung von unnötigen Wiederholungen nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden Erfindung - gemäß einem e r s t e n Aspekt der vorliegenden Erfindung - ist somit eine Substratplatte zur Verwendung in der additiven Fertigung, wobei die Oberfläche der Substratplatte, auf welcher ein Bauteil aufgebaut wird, insbesondere zumindest bereichsweise strukturiert ist.

Denn, wie nunmehr überraschenderweise herausgefunden wurde, lässt sich durch eine Strukturierung, insbesondere dreidimensionale Strukturierung, der Substratplatte eine deutlich verbesserte Haftung von Bauteilen und Hilfsstrukturen, insbesondere Stütz- bzw. Ankerstrukturen, auf der Substratplatte erzielen. Auf diese Weise wird ein unbeabsichtigtes Ablösen der Bauteile bzw. der Hilfsstrukturen während des Bauprozesses, d.h. während der additiven Fertigung von der Substratplatte vermieden.

Im Rahmen der vorliegenden Erfindung ist es nicht vorgesehen, dass - wie bei Substratplatten Standes der Technik notwendig - das Material des Bauteils oder der Hilfsstrukturen mit dem Material der Substratplatte verschmolzen wird; vielmehr wird durch eine mechanische Verankerung des Bauteils bzw. von Hilfsstrukturen, insbesondere Stützstrukturen oder Ankerstrukturen, eine Fixierung der Bauteile auf der Substratplatte und somit ein formstabiles Herstellen von Bauteilen bzw. dreidimensionalen Strukturen ermöglicht, und dies auch bei Baufeldtemperaturen deutlich unterhalb der Rekristallisationstemperatur von polymeren Werkstoffen. Eine mechanische Fixierung, insbesondere Verzahnung, der aufzubauenden Strukturen auf der Substratplatte ist deutlich widerstandsfähiger und weniger fehleranfällig als das Verschmelzen mit dem Material der Substratplatte. Insbesondere ist es im Rahmen der vorliegenden Erfindung möglich, Substratplatten aus Materialien bereitzustellen, welche zum einen mit höherer Präzision gefertigt werden können als Kunststoffplatte und auch unter Temperaturbelastung dimensionsstabil sind und welche zum anderen deutlich verbesserte Wärmeleitfähigkeiten im Vergleich zu Substratplatten aus Kunststoff aufweisen. Beispielsweise können im Rahmen der vorliegenden Erfindung Substratplatten aus Metallen verwendet werden.

Die erfindungsgemäße Substratplatte ist in einer Vielzahl von Pulverbettverfahren einsetzbar, welche nicht allein auf das selektive Lasersintern (SLS) oder das selektive Laserschmelzen (LSM) von polymeren, insbesondere thermoplastischen polymeren, Werkstoffen beschränkt ist; es können vielmehr auch Metallpulver mit der erfindungsgemäßen Substratplatte verarbeitet und Metallbauteile hergestellt werden. Seine besondere Leistungsfähigkeit zeigt das erfindungsgemäße Verfahren jedoch bei der Verarbeitung von Hochleistungspolymeren.

Die erfindungsgemäße Substratplatte ermöglicht einerseits einen formstabilen und schnellen Aufbau von dreidimensionalen Strukturen, insbesondere Bauteilen, speziell aus Hochleistungspolymeren, erlaubt andererseits trotzdem eine einfache mechanische Ablösbarkeit der Bauteile von der Substratplatte sowie von Hilfsstrukturen, wie Stütz- und/oder Ankerstrukturen, sei dies nun manuell oder maschinell. Dreidimensionale Strukturen bzw. Bauteile könne beispielsweise einfach mit Hilfe eines Spachtels von der Oberfläche der Substratplatte entfernt werden.

Unter einer dreidimensionalen Struktur ist dabei im Rahmen der vorliegenden Erfindung jedes dreidimensionale Objekt zu verstehen, dass durch die additive Fertigung hergestellt wird, insbesondere Bauteile und Hilfsstrukturen. Bei den Bauteilen handelt es sich vorzugsweise um die herzustellenden Produkte, während Hilfsstrukturen zur Herstellung der Bauteile verwendet werden, insbesondere zur Erzeilung der Formstabilität, und nach Abschluss des Bauprozesses entfernt werden.

Die erfindungsgemäße Substratplatte ermöglicht somit die Herstellung von dreidimensionalen Strukturen bzw. Bauteilen aus Hochleistungspolymeren, wie beispielsweise PEEK, PAEK oder ABS bei Temperaturen deutlich unterhalb der Rekristallisationstemperatur der Polymere, wobei nicht nur die Geometrien und Bauteile spannungsfrei erhalten werden können, sondern auch bei Temperaturen gearbeitet werden kann, welche eine vollständige Wiederverwendung nicht verwendeten Pulvers des Pulverbetts ermöglichen.

Unter einer Substratplatte ist im Rahmen der vorliegenden Erfindung ein plattenförmiges Substrat zu verstehen, auf welchem die Bauteile und ggf. Stützstrukturen und Ankerstrukturen erzeugt werden. Die Substratplatte stellt in gängigen Anlagen bzw. Vorrichtungen zum selektiven Laserschmelzen oder selektiven Lasersintern die untere Baufeldbegrenzung dar und kann üblicherweise in Baurichtung, d.h. vertikal bzw. in z-Richtung bewegt werden. Die erfindungsgemäße Substratplatte kann einen schichtförmigen Aufbau besitzen und aus mehreren Schichten bestehen.

Unter der dreidimensionalen Struktur einer Oberfläche bzw. einer Oberfläche, welche dreidimensional strukturiert ist, ist im Rahmen der vorliegenden Erfindung eine Struktur bzw. eine Oberfläche zu verstehen, welche Erhebungen und Vertiefungen bzw. Einbuchtungen aufweist, so dass eine dreidimensionale Struktur auf der Substratplatte gebildet wird. Die Strukturen besitzen dabei üblicherweise Ausdehnungen im µm- bis mm-Bereich, insbesondere was ihre Tiefe, d.h. ihre Ausdehnung in z-Richtung bzw. senkrecht zur Hauptausdehnungsebenen der Platte, anbelangt, so dass weiterhin von einer Substratplatte gesprochen wird. Die Substratplatte ist somit vorzugsweise makroskopisch planar, weist jedoch zumindest Bereiche auf, in welche dreidimensionale Strukturen vorliegen und somit eine unebene bzw. raue Oberfläche geschaffen wird, in welche die mittels additiver Fertigung aufzubauenden dreidimensionalen Strukturen, insbesondere Bauteile und Hilfsstrukturen, verankert werden können. Insbesondere bilden die höchsten Erhebungen bzw. Punkte auf der Substratplatte in z-Richtung vorzugsweise eine Ebene.

Im Rahmen der vorliegenden Erfindung wird das für die additive Fertigung verwendete Material, insbesondere eine pulverförmige Zusammensetzung, vorzugsweise, ein thermoplastisches Pulver, vorzugsweise zumindest teilweise aufgeschmolzen und nimmt somit die Kontur der dreidimensionalen Struktur in Form eines Negativs an und verzahnt sich somit mit dieser.

Gemäß einer bevorzugten Ausführungsform der vorliegenden Erfindung ist es vorgesehen, dass die gesamte Oberfläche der Substratplatte dreidimensional strukturiert ist.

Im Rahmen der vorliegenden Erfindung ist es üblicherweise vorgesehen, dass die Strukturen durch Erhebungen und/oder Vertiefungen, insbesondere durch Aussparungen, Löcher, Bögen, Rippen, Streben und/oder Spitzen, gebildet sind. Die Strukturen können in diesem Zusammenhang gleichmäßig sein, d.h. es kann beispielsweise eine durchgängige Struktur von Rippen bzw. Spitzen oder Bögen vorgesehen sein bzw. eine Lochstruktur. Gleichfalls sind jedoch auch gemischte Strukturen möglich, um besonders gute Haftungsergebnisse zu erzielen. Insbesondere werden durch benachbarte erhabene Strukturen Zwischenräume gebildet.

Im Rahmen der vorliegenden Erfindung ist es gleichermaßen üblicherweise vorgesehen, dass die Strukturen Hohlräume, Durchgänge und/oder Zwischenräume aufweisen. Die Hohlräume, Durchgänge und/oder Zwischenräume können dabei entweder durchgängig, d.h. kontinuierlich, oder lokal begrenzt sein.

Besonders gute Ergebnisse werden im Rahmen der vorliegenden Erfindung erhalten, wenn die Vertiefungen und/oder Zwischenräume zwischen den Erhabungen, insbesondere Löcher und Aussparungen und/oder Hohlräume, Durchgänge und/oder Zwischenräume, eine größere Ausdehnung besitzen als die kleinsten Partikel des zu verarbeitenden Materials.

Wenn die Vertiefungen und/oder Zwischenräume zwischen den Erhabungen, insbesondere Löcher und Aussparungen und/oder die Hohlräume, Durchgänge und/oder Zwischenräume, eine größere Ausdehnung besitzen als die kleinsten Partikel des zu verarbeitenden Materials ist gewährleistet, dass die Löcher, Aussparungen, Hohlräume, Durchgänge und/oder Zwischenräume von dem zu verarbeitendem Material, insbesondere der pulverförmigen Zusammensetzung, vollständig ausgefüllt werden, so dass im Falle des Aufschmelzens eine möglichst gleichmäßige Benetzung mit dem Material, insbesondere mit einem thermoplastischen polymeren Material, erfolgen kann.

Im Rahmen der vorliegenden Erfindung werden besonders gute Ergebnisse erhalten, wenn die Löcher und Aussparungen und/oder Hohlräume, Durchgänge und/oder Zwischenräume eine Ausdehnung im Bereich von 0,05 bis 20 mm, insbesondere 0,1 bis 10 mm, vorzugweise 0,2 bis 5 mm, bevorzugt 0,3 bis 3 mm, besonders bevorzugt 0,5 bis 2 mm, aufweisen. Die zuvor genannten Längenangaben beziehen sich vorzugsweise auf eine Ausdehnung parallel zur Hauptausdehnungsrichtung der Substratplatte, d.h. entlang einer xy-Ebene.

Gleichermaßen ist es im Rahmen der vorliegenden Erfindung vorzugsweise vorgesehen, dass die einzelnen Elemente der dreidimensionalen Strukturen zwischen den Löcher und Aussparungen und/oder Hohlräumen, Durchgängen und/oder Zwischenräumen eine Ausdehnung vorzugsweise in x- und/oder y-Richtung bzw. parallel zur Hauptausdehnungsrichtung der Substratplatte im Bereich von 0,01 bis 100 mm, insbesondere 0,1 bis 10 mm, vorzugsweise 0,2 bis 5 mm, bevorzugt 0,3 bis 3 mm, besonders bevorzugt 0,5 bis 1 mm, aufweisen. Die aus Material bestehenden Teile der dreidimensionalen Strukturen müssen eine gewisse Ausdehnung, insbesondere Dicke besitzen, um den Bauteilen sowie den Anker- und Stützstrukturen den notwendigen Halt zu geben. Hierfür wird eine gewisse mechanische Festigkeit und Stabilität benötigt.

Im Rahmen der vorliegenden Erfindung ist darüber hinaus üblicherweise vorgesehen, dass die dreidimensionalen Strukturen eine Höhe im Bereich von 0,05 bis 20 mm, insbesondere 0,1 bis 10 mm, vorzugsweise 0,2 bis 5 mm, bevorzugt 0,5 bis 2 mm, aufweisen. Die zuvor genannte Höhe betrifft vorzugsweise die Ausdehnung in vertikaler Richtung, d.h. in z-Richtung bzw. senkrecht zur Hauptausdehnungsrichtung der Substratplatte, und entspricht der Differenz zwischen Erhebungen und Vertiefungen, sie gibt somit an, welche Höhe bzw. Tiefe die dreidimensionalen Strukturen aufweisen. Die Höhe oder Tiefe der Erhebungen oder Vertiefungen auf der Oberfläche der Substratplatte besitzen üblicherweise eine Ausdehnung von mehreren Pulverschichten bzw. der mit dem additiven Fertigungsverfahren herzustellenden Lagen des versinterten bzw. geschmolzenen Materials, um eine möglichst gute Verankerung auf der Substratplatte zu erzielen.

Gemäß einer bevorzugten Ausführungsform der vorliegenden Erfindung ist die Substratplatte beheizbar. Eine beheizbare Substratplatte ermöglicht es, die Substratplatte und insbesondere die Oberfläche der Substratplatte auf die für die additive Fertigung benötigten Temperaturen von über 100°C und bis zu über 170°C zu bringen, ohne dass Verwerfungen und Spannungen in den aufgebauten dreidimensionalen Strukturen auftreten. Die Verwerfungen und Spannungen treten bei Substratplatten des Standes der Technik insbesondere dann auf, wenn die Substratplatte über eine Baufeldheizung von oben beheizt wird. Durch die Verwendung geeigneter Materialien zur Herstellung der Substratplatte und einer beheizbaren Substratplatte, insbesondere einer homogen beheizbaren Substratplatte, kann durch die Unterdrückung von Spannungen und Verwerfungen ein Verziehen der Substratplatte sowie ein Verziehen der aufgebauten dreidimensionalen Strukturen vermieden werden, wodurch einerseits ein gleichmäßiger Auftrag der Pulverschichten möglich ist und andererseits darüber hinaus die Formstabilität der aufgebauten Strukturen gewährleistet ist. Im Rahmen der vorliegenden Erfindung wird es bevorzugt, wenn die Substratplatte auf Temperaturen im Bereich von 80 bis 250°C, insbesondere 90 bis 220°C, insbesondere 100 bis 200°C, vorzugsweise 120 bis 170°C aufheizbar, insbesondere homogen aufheizbar ist.

Gemäß einer bevorzugten Ausführungsform der vorliegenden Erfindung ist die Substratplatte direkt und/oder indirekt beheizbar. Besonders bevorzugt wird es in diesem Zusammenhang, wenn die Substratplatte indirekt beheizbar ist. Unter einer direkt beheizbaren Substratplatte ist dabei im Rahmen der vorliegenden Erfindung zu verstehen, dass unmittelbar in die oder unter der Substratplatte eine Heizeinrichtung eingelassen bzw. angeordnet ist.

Unter einer indirekt beheizbaren Substratplatte ist im Rahmen der vorliegenden Erfindung eine Substratplatte zu verstehen, welche beispielsweise auf einer Grundplatte angeordnet ist, welche wiederrum beheizt ist. Vorzugsweise besteht diese Grundplatte aus einem wärmeleitfähigen Material, so dass eine sehr gleichmäßige Heizung der Substratplatte erzielt wird.

Im Rahmen der vorliegenden Erfindung kann es darüber hinaus vorgesehen sein, dass die Oberfläche der Substratplatte, vorzugsweise die Substratplatte, aus einem Material mit einem höheren Schmelzpunkt als das zu verarbeitende Material besteht. Vorzugsweise besteht im Rahmen der vorliegenden Erfindung die gesamt Substratplatte aus einem oder mehreren Materialien, welche einen höheren Schmelzpunkt als das zu verarbeitende Material aufweisen.

Durch die Verwendung von Materialien, welche einen höheren Schmelzpunkt als das in der additiven Fertigung zu verarbeitende Material aufweisen, wird eine besonders stabile mechanische Verankerung auf der Substratplatte erzielt. Insbesondere wird gleichfalls vermieden, dass die Oberfläche der Substratplatte, insbesondere die strukturierte Oberfläche der Substratplatte während der additiven Fertigung aufgeschmolzen wird und ihre definierten Eigenschaften verliert. Üblicherweise weist die Oberfläche der Substratplatte, vorzugsweise die Substratplatte, ein Material auf, welches eine Wärmeleitfähigkeit von mindestens 1 W/mK, insbesondere mindestens 2 W/mk, vorzugsweise mindestens 3 W/mK, aufweist.

In diesem Zusammenhang werden besonders gute Ergebnisse erhalten, wenn die Substratplatte das Material in Mengen von mindestens 1 Gew.-%, insbesondere mindestens 20 Gew.-%, vorzugsweise mindestens 50 Gew.-%, bevorzugt mindestens 70 Gew.-%, bezogen auf die Substratplatte, enthält.

Gleichfalls werden guter Ergebnisse erhalten, wenn die Substratplatte das Material in Mengen von 1 bis 100 Gew.-%, insbesondere 20 bis 100 Gew.-%, vorzugsweise 50 bis 100 Gew.-%, vorzugsweise 70 bis 100 Gew.-%, bezogen auf die Substratplatte, aufweist. Bevorzugt besteht die Substratplatte aus dem Material.

Im Rahmen der vorliegenden Erfindung werden gute Ergebnisse erhalten, wenn das Material der Substratplatte ausgewählt ist aus der Gruppe von Metallen, Metalloxiden, Metallnitriden, Siliciumkarbid, Graphit und der durch Additive und Füllstoffe modifizierten Kunststoffe. Bei den verwendeten Metalloxiden handelt es sich vorzugsweise um Aluminiumoxid und bei den Metallnitriden um Aluminiumnitrid.

Besonders gute Ergebnisse werden jedoch erhalten, wenn das Material der Substratplatte ausgewählt ist aus der Gruppe von Metallen, Metalloxiden, Metallnitriden und der durch Additive und Füllstoffe modifizierten Kunststoffe. In diesem Zusammenhang wurde besonders bevorzugt, wenn das Metall ausgewählt ist aus Eisen, Aluminium und Magnesium und deren Legierungen, vorzugsweise Stahl, Edelstahl, Aluminium, vorzugsweise Stahl, Edelstahl, Aluminium und Aluminiumlegierungen. Besonders bevorzugt wird es, wenn das Material der Substratplatte ausgewählt ist aus Stahl, Edelstahl und Aluminium.

Gemäß einer bevorzugten Ausführungsform der vorliegenden Erfindung ist es vorgesehen, dass die Substratplatte einen mehrschichtigen Aufbau besitzt. Insbesondere kann es vorgesehen sein, dass die Oberfläche der Substratplatte in Form einer Oberflächenschicht ausgebildet ist, welche beispielsweise mittels additiver Fertigung, auf den Grundkörper der Substratplatte aufgebracht ist. Die Aufbringung der dreidimensionalen Strukturen, insbesondere in Form einer Oberflächenschicht auf den Grundkörper der Substratplatte mittels additiver Fertigung ermöglicht eine sehr präzise und reproduzierbare Fertigung von strukturierten Substratplatten.

In diesem Zusammenhang kann es vorgesehen sein, dass die Oberflächenschicht der Substratplatte das gleiche oder eine anderes Material aufweist als der Grundkörper. So kann beispielsweise der Grundkörper der Substratplatte aus einem günstigeren Material gefertigt werden, wo hingegen die Oberflächenschicht der Substratplatte aus einem höherwertigen, insbesondere mechanisch widerstandsfähigeren Material besteht, welches kostenintensiver ist. Was nun die Dicke der Oberflächenschicht der Substratplatte anbelangt, so kann es im Rahmen der vorliegenden Erfindung vorgesehen sein, dass die Oberflächenschicht eine Höhe von 0,05 bis 20 mm, insbesondere 0,1 bis 10 mm, vorzugsweise 0,2 bis 5 mm, bevorzugt 0,5 bis 3 mm, aufweisen.

Besonders gute Ergebnisse werden im Rahmen der vorliegenden Erfindung erhalten, wenn die Oberfläche der Substratplatte beschichtet ist. Durch eine Beschichtung der Oberfläche der Substratplatte können die Oberflächeneigenschaften der Substratplatte nochmals gezielt eingestellt werden. Insbesondere ist es möglich, die Haftung des aufgeschmolzenen Materials an der Substratplatte nochmals deutlich zu verbessern oder auch eine leichtere Trennung des aufgeschmolzenen Materials und der Substratplatte zu ermöglichen.

In diesem Zusammenhang kann es vorgesehen sein, dass die Oberfläche der Substratplatte mit einem Haftvermittler beschichtet ist und/oder dass die Oberfläche der Substratplatte mit einem Polymer, insbesondere einem Hochleistungspolymer, vorzugsweise ausgewählt aus der Gruppe von Polyaryletherketon (PAEK), Polyetheretherketon (PEEK), Polyetherketonketon (PEKK), Polyetherimiden (PEI), Acrylnitril-Butadien-Styrol (ABS), Polyamiden (PA), Polyphenylsulfonen (PPS), Polysulfon (PS), Polyethersulfon (PES), und Polyamid-Imiden (PAI), beschichtet ist. Durch eine Beschichtung der die Oberfläche der Substratplatte mit Hochleistungspolymeren oder Materialien mit ähnlichen Eigenschaften kann die Haftung der aufzubauenden dreidimensionalen Strukturen, insbesondere Objekte, an der Substratplatte deutlich verbessert werden. Vorzugsweise ist es vorgesehen, dass die Oberfläche der Substratplatte mit einem Haftvermittler und/oder mit dem in der additiven Fertigung zu verarbeitenden Material, insbesondere der pulverförmigen Zusammensetzung, beschichtet ist. So kann es beispielsweise vorgesehen sein, dass die Oberfläche der Substratplatte mit. Die Verwendung eines Haftvermittlers als auch eine Beschichtung der Oberfläche der Substratplatte mit einer dünnen Schicht, insbesondere einer dünnen Pulverschicht, des in der additiven Fertigung zu verarbeitenden Materials verbessert die Verbindung von Substratplatte und Bauteilen bzw. dreidimensionalen Strukturen erheblich. Als Haftvermittler kommen beispielsweise Primer für Kunststoff in Betracht. Auf diese Weise kann die mechanische Haftung des zu verarbeitenden Materials nochmals durch eine chemische Haftung ergänzt und verstärkt werden.

Was nun die Abmessung der Substratplatte anbelangt, so kann diese in weiten Bereichen variieren, insbesondere in Abhängigkeit von den Abmessungen des Baubereichs innerhalb einer Vorrichtung. Es ist jedoch üblicherweise vorgesehen, dass die Substratplatte ein Dicke im Bereich von 0,1 bis 100 mm, insbesondere 1 bis 50 mm, vorzugsweise 2 bis 40 mm, bevorzugt 3 bis 30 mm, besonders bevorzugt 5 bis 25 mm, aufweist. Substratplatten mit den vorgenannten Dicken sind zum einen mechanisch widerstandsfähig genug um als eigenständige Substratplatte verwendet zu werden, andererseits dünn genug, um gleichmäßig indirekt beheizt zu werden.

Im Rahmen der vorliegenden Erfindung ist es darüber hinaus vorzugsweise vorgesehen, dass die Substratplatte in der Aufbauebene, d.h. in einer Ebene über der höchsten Erhebung der Substratplatte eine Einheitstoleranz über die gesamt Bauebene von weniger als 1 mm, insbesondere weniger als 0,5 mm, vorzugsweise weniger als 0,1 mm, aufweist. Derartige geringe Toleranzen sind mit reinen kunststoffbasierten Substratplatten nur schwer zu erzielen und insbesondere unter Wärmeeinwirkungen nicht beizubehalten.

Es zeigen die Figurendarstellungen gemäß
- Fig. 1: eine schematische Darstellung einer erfindungsgemäßen Vorrichtung in einer Schnittdarstellung entlang einer xz-Ebene
- Fig. 2: eine bevorzugte Ausführungsform einer erfindungsgemäßen Bauplatte in einer Schnittdarstellung senkrecht zu einer der beiden Hauptausdehnungsrichtungen der Platte
- Fig. 3: eine perspektivische Ansicht einer erfindungsgemäßen Bauplatte
- Fig. 4: eine Detailansicht einer erfindungsgemäßen Bauplatte in perspektivischer Ansicht
- Fig. 5: eine Detailansicht der erfindungsgemäßen Bauplatte gemäß Fig. 4 in der Draufsicht
- Fig. 6: eine Schnittdarstellung entlang einer xz-Ebene aus dem Bauraum einer erfindungsgemäßen Vorrichtung mit der Darstellung hergestellter dreidimensionaler Strukturen in mehreren Ebenen und
- Fig. 7: eine Abbildung einer Grundkontaktfläche mit darauf aufgebauten dreidimensionalen Strukturen in perspektivischer Ansicht.

Weiterer Gegenstand der vorliegenden Erfindung - gemäße einem **zweiten** Aspekt der vorliegenden Erfindung - ist die Verwendung einer zuvor beschriebenen Substratplatte in einem generativen Fertigungsverfahren, insbesondere einem Pulverbettverfahren.

Bevorzugt in das generative Fertigungsverfahren ausgewählt aus selektivem Laserschmelzen (SLM) und selektivem Lasersintern (SLS).

Für weitergehende Einzelheiten zu diesem Erfindungsaspekt kann auf die obigen Ausführungen zu der erfindungsgemäßen Substratplatte verwiesen werden, welche im Hinblick auf die erfindungsgemäße Verwendung einer Substratplatte entsprechend gelten.

Weiterer Gegenstand der vorliegenden Erfindung - gemäße einem d r i t t e n Aspekt der vorliegenden Erfindung - ist eine Bauplatte, welche mindestens eine zuvor beschriebene Substratplatte und mindestens eine Grundplatte aufweist.

Auf einer Grundplatte können dabei mehrere Substratplatten angebracht sein oder auf auch an einer Substratplatte mehrere Grundplatten angeordnet sein. Üblicherweise wird jedoch jeder Substratplatte eine Grundplatte zugeordnet. Wie zuvor jedoch ausgeführt, können sowohl die Substratplatte als auch die Grundplatte mehrteilig ausgeführt sein.

Im Rahmen der vorliegenden Erfindung ist es üblicherweise vorgesehen, dass die Substratplatte und die Grundplatte direkt oder indirekt, vorzugsweise indirekt miteinander verbunden sind. In diesem Zusammenhang kann es insbesondere vorgesehen sein, dass die Substratplatte und die Grundplatte über Befestigungseinrichtungen an der Grundplatte befestigt werden können. Unter einer indirekten Befestigung bzw. einer indirekten Verbindung zwischen Substratplatte und Grundplatte ist dabei zu verstehen, dass zwischen der Grundplatte und der Substratplatte mindestens eine weitere Schicht wenigstens eines Materials vorgesehen ist. Bei einer direkten Befestigung sind die Substratplatte und die Grundplatte unmittelbar miteinander verbunden, ohne weitere Zwischenschichten. Die Befestigung kann, wie zuvor ausgeführt, über geeignete Befestigungseinrichtungen, wie beispielsweise Schrauben bzw. Schraub- oder Steckverbindungen, vorzugweise Schraubverbindungen erfolgen.

Wie zuvor bereits ausgeführt, kann gemäß im Rahmen der vorliegenden Erfindung vorgesehen sein, dass die Substratplatte aktiv oder passiv beheizbar ist. Gemäß einer bevorzugten Ausführungsform der vorliegenden Erfindung wird die Substratplatte über die Grundplatte beheizt, d.h. die Substratplatte ist über die Grundplatte indirekt beheizbar. Diese indirekte Beheizung, bzw. passive Beheizung ermöglicht eine gleichmäßige und schonende Beheizung der Substratplatte, was die Gefahr von Spannungen in der Substratplatte minimiert.

Im Rahmen der vorliegenden Erfindung ist es üblicherweise vorgesehen, dass die Oberfläche der Substratplatte nivellierbar ist. Eine Nivellierung ist sinnvoll, da es trotz eines innigen Verbundes mit der Grundplatte und einer schonenden Heizung der Substratplatte zu geringfügigen Spannungen der Substratplatte kommen kann, welche ausgeglichen werden müssen, um eine möglichst geringe Toleranz, insbesondere die im Zusammenhang der Substratplatte beschriebene Einheitstoleranz, zu erzielen.

Gemäß einer bevorzugten Ausführungsform der vorliegenden Erfindung ist es dabei vorgesehen, dass die Substratplatte gegenüber der Grundplatte nivellierbar ist. Die Nivellierung kann dabei insbesondere mittels geeigneter Nivelliereinrichtungen, beispielsweise mittels Stellschrauben, erfolgen.

Gemäß einer bevorzugten Ausführungsform sind Befestigungs- und/oder Nivelliereinrichtungen zur Befestigung der Substratplatte an der Grundplatte und/oder zur Nivellierung der Substratplatte gegenüber der Grundplatte in den Randbereichen der Substratplatte bzw. der Grundplatte vorgesehen.

Gemäß einer weiteren Ausführungsform der vorliegenden Erfindung ist die Grundplatte nivellierbar, insbesondere nach Einbau in einer Vorrichtung. Eine Nivellierung der Grundplatte ist gleichfalls über eine Nivelliereinrichtung möglich.

Was nun das Material der Grundplatte anbelangt, so kann hier prinzipiell jedes geeignete Material verwendet werden. Es hat sich jedoch bewährt, wenn die Grundplatte aus einem Material mit einem höheren Schmelzpunkt als das zu verarbeitende Material besteht. Grundsätzlich kann die Grundplatte aus dem gleichen Material bestehen wie die Substratplatte.

Gleichfalls werden im Rahmen der vorliegenden Erfindung besonders gute Ergebnisse erhalten, wenn die Grundplatte eine höhere Wärmeleitfähigkeit als die Substratplatte aufweist.

Üblicherweise enthält die Grundplatte ein Material, welches eine Wärmeleitfähigkeit von mindestens 1 W/mK, insbesondere mindestens 2 W/mK, vorzugsweise mindestens 3 W/mK, aufweist.

In diesem Zusammenhang werden besonders gute Ergebnisse erhalten, wenn die Grundplatte das Material in Mengen von mindestens 1 Gew.-%, insbesondere mindestens 20 Gew.-%, vorzugsweise mindestens 50 Gew.-%, bevorzugt mindestens 70 Gew.-%, bezogen auf die Grundplatte, enthält.

Gleichfalls werden gute Ergebnisse erhalten, wenn die Grundplatte das Material in Mengen von 1 bis 100 Gew.-%, insbesondere 20 bis 100 Gew.-%, vorzugsweise 50 bis 100 Gew.-%, vorzugsweise 70 bis 100 Gew.-%, bezogen auf die Grundplatte, enthält.

Im Rahmen der vorliegenden Erfindung werden gute Ergebnisse erhalten, wenn das Material der Grundplatte ausgewählt ist aus der Gruppe von Metallen, Metalloxiden, Metallnitriden, Siliciumcarbid, Graphit, und der durch Additive und Füllstoffen modifizierten Kunststoffe. Bei den Metalloxiden und Metallnitriden handelt es sich insbesondere um Aluminiumoxid oder Aluminiumnitrid.

Gemäß einer bevorzugten Ausführungsform der vorliegenden Erfindung ist das Material der Grundplatte ausgewählt aus der Gruppe von Metallen, Metalloxiden, Metallnitriden und der durch Additive und Füllstoffe modifizierten Kunststoffe.

Besonders gute Ergebnisse werden in diesem Zusammenhang erhalten, wenn das Metall ausgewählt ist aus Eisen, Aluminium und Magnesium und deren Legierungen, vorzugsweise Stahl, Edelstahl, Aluminium und Aluminiumlegierungen. Besonders bevorzugt wird es im Rahmen der vorliegenden Erfindung, wenn das Material der Grundplatte ausgewählt ist aus Stahl, Edelstahl und Aluminium.

Im Rahmen der vorliegenden Erfindung ist vorteilhafter Weise vorgesehen, dass zwischen der Substratplatte und der Grundplatte insbesondere zumindest Bereichsweise eine Zwischenschicht angeordnet ist.

Besonders gute Ergebnisse werden in diesem Zusammenhang erhalten, wenn die Zwischenschicht ein wärmeleitendes Material enthält oder aus einem wärmeleitenden Material besteht. Durch die Verwendung eines wärmeleitenden Materials als Zwischenschicht oder in der Zwischenschicht zwischen der Substratplatte und der Grundplatte wird der Wärmeübergang von der Grundplatte auf der Substratplatte bei einer indirekten bzw. passiven Beheizung der Substratplatte über die Grundplatte nochmals verbessert.

Gemäß einer bevorzugten Ausführungsform der vorliegenden Erfindung besteht die Zwischenschicht aus einer wärmeleitenden Folie oder eine Wärmeleitpaste.

Darüber hinaus kann es im Rahmen der vorliegenden Erfindung gleichfalls vorgesehen sein, dass die Bauplatte Befestigungseinrichtungen zur Befestigung der Bauplatte in einer Vorrichtung, insbesondere in einer Vorrichtung für das selektive Lasersintern und/oder das selektive Laserschmelzen, aufweist.

Für weitergehende Einzelheiten zu diesem Erfindungsaspekt kann auf die obigen Ausführungen zu der erfindungsgemäßen Substratplatte und ihrer Verwendung verwiesen werden, welche im Hinblick auf die erfindungsgemäße Bauplatte entsprechend gelten.

Weiterer Gegenstand der vorliegenden Erfindung - gemäße einem **vierten** Aspekt der vorliegenden Erfindung - ist die Verwendung einer zuvor beschriebenen Bauplatte in einem generativen Fertigungsverfahren, insbesondere einem Pulverbettverfahren.

Bevorzugt in das generative Fertigungsverfahren ausgewählt aus selektivem Laserschmelzen (SLM) und selektivem Lasersintern (SLS).

Für weitergehende Einzelheiten zu diesem Erfindungsaspekt kann auf die obigen Ausführungen zu den weiteren Erfindungsaspekten verwiesen werden, welche im Hinblick auf die erfindungsgemäße Verwendung einer Bauplatte entsprechend gelten.

Wiederrum weiterer Gegenstand der vorliegenden Erfindung - gemäß einem **fünften** Aspekt der vorliegenden Erfindung - ist eine zuvor beschriebene Grundplatte.

Die Grundplatte bildet wie zuvor beschrieben vorzugsweise eine Einheit, insbesondere eine Bauplatte, mit der gleichfalls zuvor beschriebenen Substratplatte.

Für weitergehende Einzelheiten zu der erfindungsgemäßen Grundplatte kann auf die obigen Ausführungen, insbesondere zu der erfindungsgemäßen Bauplatte verwiesen werden, welche in Bezug auf die erfindungsgemäße Grundplatte entsprechend gelten.

Wiederrum weiterer Gegenstand der vorliegenden Erfindung - gemäß einem **sechsten** Aspekt der vorliegenden Erfindung - ist eine Vorrichtung zur additiven Fertigung von dreidimensionalen Strukturen aus Metall oder Kunststoff, vorzugsweise Kunststoff, mittels Lasersinterns oder Laserschmelzens, aufweisend ein vorzugsweise beheizbaren Baufeld, wobei die Vorrichtung weiterhin
mindestens eine zuvor beschriebene Substratplatte und/oder
mindestens eine zuvor beschriebene Grundplatte und/oder
mindestens eine zuvor beschriebene Bauplatte
aufweist, wobei die Substratplatte und/oder die Grundplatte und/oder die Bauplatte in z-Richtung bewegbar ist bzw. bewegt werden kann.

Unter einem Baufeld ist im Rahmen der vorliegenden Erfindung der Bereich einer Vorrichtung zur additiven Fertigung zu verstehen, in welchem die additive Fertigung durchgeführt und insbesondere das zu verarbeitende Material in Schichten vorgelegt wird.

Die zuvor beschriebene Substratplatte, die Grundplatte wie auch die Bauplatte sind insbesondere zur Verwendung in Vorrichtungen für das selektive Lasersintern (SLS) bzw. das selektive Laserschmelzen geeignet. Die weiteren Komponenten der erfindungsgemäßen Vorrichtung entsprechen den Standardvorrichtungen für das selektive Laserschmelzen bzw. das selektive Lasersintern. Die erfindungsgemäße Substratplatte bzw. die erfindungsgemäße Bauplatte bilden dabei vorzugsweise den Baufeldbereich der erfindungsgemäßen Vorrichtung, d.h. den Bereich, in welchem die additive Fertigung stattfindet und welche üblicherweise in z-Richtung bewegt werden kann bzw. bewegbar ist.

Die Vorrichtung kann eine oder mehrere Substratplatten und/oder Grundplatten und/oder Bauplatte aufweisen.

Üblicherweise ist es vorgesehen, dass die Substratplatte und/oder die Grundplatte und/oder die Bauplatte nivellierbar ist, d.h. nivelliert werden kann. Eine Nivellierbarkeit der Substratplatte und/oder der Grundplatte und/oder der Bauplatte ist notwendig, um für die notwendige Planarität der Oberfläche der Substratplatte zu sorgen, damit die gewünschte verbesserte Haftung von dreidimensionalen Strukturen bzw. von Stützstrukturen oder Ankerstrukturen an der Substratplatte erzielt werden kann. Die Nivellierung kann dabei entweder automatisch oder manuell erfolgen. Gleichfalls ist es möglich, dass die Nivellierung allein über eine Nivellierung der Substratplatte, insbesondere eine Nivellierung der Substratplatte gegenüber einer Grundplatte, erfolgt oder dass die Nivellierung der Substratplatte über die Grundplatte bzw. über die Bauplatte insgesamt erfolgen kann.

Gemäß einer bevorzugten Ausführungsform der vorliegenden Erfindung finden nach Einbringung der Bauplatte, d.h. einer Einheit aus Substratplatte und Grundplatte, eine Nivellierung, insbesondere Vornivellierung, vorzugsweise eine automatische Vornivellierung der Bauplatte, insbesondere über die Grundplatte statt und nachfolgend eine Nivellierung, insbesondere eine Fein-Nivellierung, der Substratplatte gegenüber der Grundplatte, um die Oberfläche der Substratplatte vollständig planar und vorzugsweise horizontal auszurichten.

Im Rahmen der vorliegenden Erfindung wird es somit bevorzugt, wenn die Bauplatte nivellierbar ist, wobei insbesondere die Neigung der Oberfläche der Substratplatte gegenüber der Bauebene eingestellt wird, und zusätzlich die Substratplatte gegenüber der Grundplatte nivellierbar ist, wobei die Planarität der Oberfläche der Substratplatte eingestellt wird.

Gemäß einer wiederrum bevorzugten Ausführungsform der vorliegenden Erfindung ist die Substratplatte und/oder die Grundplatte und/oder die Bauplatte in der Vorrichtung in x- und/oder y-Richtung bewegbar und/oder ist die Substratplatte und/oder die Grundplatte und/oder die Bauplatte aus der Vorrichtung entnehmbar. Durch eine Bewegbarkeit der Substratplatte und/oder der Grundplatte und/oder der Bauplatte in der Vorrichtung in x- bzw. y-Richtung oder durch eine Entnehmbarkeit der Substratplatte und/oder der Grundplatte und/oder der Bauplatte ist es möglich, nach Beendigung des Bauvorganges, d.h. der additiven Fertigung, die Bauteile samt Substratplatte und/oder Grundplatte und/oder Bauplatte aus der Vorrichtung zu entnehmen und einfach von der Substratplatte sowie den Anker- und Stützstrukturen zu trennen.

Die Substratplatte und/oder die Grundplatte und/oder die Bauplatte sind dabei gegebenenfalls mit an der Substratplatte und/oder der Grundplatte und/oder der Zusatzmodulen, wie beispielsweise Befestigungseinrichtungen, aus der Vorrichtung zu entnehmen.

Üblicherweise ist es im Rahmen der vorliegenden Erfindung vorgesehen, dass die Substratplatte und/oder die Grundplatte und/oder die Bauplatte durch Befestigungseinrichtungen in der Vorrichtung befestigt werden kann. In diesem Zusammenhang hat es sich besonders bewährt, wenn die Befestigungseinrichtungen ausgewählt sind aus Schnellfixierungsmodulen und Schnellspannmodulen. Die Verwendung von Schnellfixierungsmodulen oder Schnellspannmodulen erlaubt insbesondere eine schnelle und problemlose Entnehmbarkeit und Wiedereinsetzung der Substratplatte und/oder der Grundplatte und/oder der Bauplatte aus bzw. in die Vorrichtung.

Darüber hinaus kann über die Befestigungsmittel auch eine Nivellierung der Substratplatte und/oder der Grundplatte und/oder der Bauplatte erfolgen. Bevorzugt werden somit kombinierte Befestigungs- und Nivellierungseinrichtungen verwendet.

Im Rahmen der vorliegenden Erfindung kann es darüber hinaus vorgesehen sein, dass die Substratplatte und/oder der Grundplatte und/oder der Bauplatte gemeinsam mit einem Baubehälter aus der Vorrichtung entnehmbar ist. Unter einem Baubehälter ist im Rahmen der vorliegenden Erfindung ein Behälter zu verstehen, welcher das gesamte Baufeld beinhaltet.

Für weitergehende Einzelheiten zu der erfindungsgemäßen Vorrichtung kann auf die obigen Ausführungen zu den übrigen Erfindungsaspekten verwiesen werden, welche in Bezug auf die erfindungsgemäße Vorrichtung entsprechend gelten.

Wiederrum weiterer Gegenstand der vorliegenden Erfindung - gemäß einem **siebten** Aspekt der vorliegenden Erfindung - ist ein Verfahren zur Herstellung dreidimensionaler Strukturen mittels additiver Fertigung, insbesondere mittels Lasersinterns oder Laserschmelzens, wobei die dreidimensionalen Strukturen aus einer pulverförmigen Zusammensetzung auf einer Substratplatte mit einer strukturierten Oberfläche wie zuvor beschrieben hergestellt werden.

Das erfindungsgemäße Verfahren zur Herstellung einer dreidimensionalen Struktur wird wie zuvor dargelegt, vorzugsweise in Form des selektiven Lasersinterns (SLS) oder des selektiven Laserschmelzens (SLM) durchgeführt und ist folglich bevorzugt ein Pulverbettverfahren. Bei Pulverbettverfahren wird auf einem Baufeld, welches innerhalb einer Vorrichtung in z-Richtung bewegbar ist eine Schicht eines pulverförmigen Ausgangsmaterials aufgebracht und anschließend durch ortselektive Belichtung, vorzugsweise mit einem Laserstrahl, bestrahlt, so dass das Polymerpulver an den bestrahlten Stellen aufschmilzt und/oder versintert und eine Lage, d.h. eine Schnittebene der herzustellenden dreidimensionalen Struktur, insbesondere eines Bauteils oder einer Hilfsstruktur, insbesondere einer Stützstruktur oder einer Ankerstruktur, gebildet wird.

Üblicherweise ist es vorgesehen, dass die pulverförmige Zusammensetzung ein Polymerpulver, ein Metallpulver oder ein Präkusorpulver ist. Falls im Rahmen der vorliegenden Erfindung ein Polymerpulver eingesetzt wird, so werden besonders gute Ergebnisse erhalten, wenn das Polymerpulver das Pulver eines Hochleistungspolymers ist. In diesem Zusammenhang hat es sich bewährt, wenn das Polymerpulver ausgewählt ist aus der Gruppe von Polyaryletherketon (PAEK), Polyetheretherketon (PEEK), Polyetherketonketon (PEKK), Polyetherimiden (PEI), Acrylnitril-Butadien-Styrol (ABS), Polyamiden (PA), Polyphenylsulfonen (PPS), Polysulfon (PS), Polyethersulfon (PES), und Polyamid-Imiden (PAI). Besonders gute Ergebnisse werden jedoch erhalten, wenn das Polymerpulver ausgewählt ist aus Polyaryletherketon (PAEK), Polyetheretherketon (PEEK), Polyetherketonketon (PEKK), Polyetherimiden (PEI), Acrylnitril-Butadien-Styrol (ABS), Polyphenylsulfonen (PPS) und Polyamid-Imiden (PAI).

Gemäß einer bevorzugten Ausführungsform der vorliegenden Erfindung werden im Zuge der additiven Fertigung zusätzlich zu dem zu den herzustellenden Bauteil Stützstrukturen, insbesondere Ankerstrukturen und/oder Hilfsstrukturen, erzeugt. Anker- und Hilfsstrukturen sind insbesondere notwendig, um die Formstabilität der zu erzeugenden dreidimensionalen Strukturen zu gewährleisten. Insbesondere bei Verwendung von Hochleistungspolymeren, deren Rekristallisationstemperatur weit oberhalb der Verarbeitungstemperatur im erfindungsgemäßen Verfahren liegt, ist nicht nur eine gute Verankerung der dreidimensionalen Strukturen an der Oberfläche der Substratplatte notwendig, vielmehr müssen auch weitere Hilfsstrukturen, insbesondere Stützstrukturen, erzeugt werden, um dem Bauteil die notwendige Formstabilität zu geben. Aufgrund der verbesserten Haftung von Strukturen auf der erfindungsgemäßen Substratplatte ist es im Rahmen der vorliegenden Erfindung auch möglich, Bauteile mehrlagig übereinander zu konstruieren. Hierfür werden vorzugsweise auf der Substratplatte in Bereichen, in welchen keine Bauteile gebaut werden, Ankerstrukturen erzeugt, an welchen Bauteile aufgebaut und stabilisiert werden können, die nicht direkt mit der Substratplatte bzw. den nachfolgend beschriebenen Grundkontaktfläche verbunden sind.

Gemäß einer bevorzugten Ausführungsform der vorliegenden Erfindung ist es vorgesehen, dass die dreidimensionalen Strukturen in mehreren Ebenen hergestellt werden, insbesondere unter der Verwendung von Hilfsstrukturen, wie beispielsweise Ankerstrukturen und/oder Stützstrukturen. Eine derartige Herstellung von dreidimensionalen Strukturen, insbesondere Bauteilen, in mehreren Ebenen oberhalb der Substratplatte, werden Bauteile erschaffen, welche mit der Substratplatte nur indirekt verbunden sind. Durch diese nunmehr erhöhte Bauhöhe können die Maschinenlaufzeiten verlängert werden, da die gesamte theoretisch mögliche Bewegbarkeit des Baufeldbereiches in z-Richtung ausgeschöpft werden kann. Dies bedeutet, dass im Idealfall mit einem Gerät mehrere Tage ununterbrochen Bauteile produziert werden können, welche anschließend gemeinsam aus der Vorrichtung entnommen werden. Durch die erfindungsgemäße Verfahrensweise wird somit eine deutlich bessere Maschinenausnutzung ermöglicht. Bislang ist es im Stand der Technik nur möglich, dreidimensionale Strukturen aus Hochleistungspolymeren in einer Ebene, d.h. fest mit der Substratplatte verbunden, zu erzeugen.

Bei der Verarbeitung von Polymeren ist es im Rahmen der vorliegenden Erfindung üblicherweise vorgesehen, dass das erfindungsgemäße Verfahren bei Temperaturen des Baufeldes bzw. des Bauraums sowohl unterhalb der Schmelztemperatur als auch unterhalb der Rekristallisationstemperatur des Polymers, aber oberhalb der Glasübergangstemperatur des Polymers durchgeführt wird. Besonders bevorzugt wird es in diesem Zusammenhang, wenn das erfindungsgemäße Verfahren bei Temperaturen im Bereich oberhalb der Glasübergangstemperatur des Polymers und unterhalb der Zersetzungstemperatur, insbesondere unterhalb der Temperaturen, bei welchen der thermische oder der thermisch-oxidative Abbau des Polymers beginnt, durchgeführt wird. Auf diese Weise lässt sich nicht im Bauvorgang verbrauchtes Polymerpulver ohne Weiteres für weitere Bauvorgänge verwenden.

Im Rahmen der vorliegenden Erfindung kann es darüber hinaus auch vorgesehen sein, dass die Temperaturen innerhalb des Bauraums und/oder die Baufeldtemperaturen im Bereich von 80 bis 250°C, insbesondere 90 bis 220°C, vorzugsweise 100 bis 200°C, vorzugsweise 120 bis 170°C, eingestellt wird. Die Temperatureinstellung erfolgt insbesondere über eine beheizbare Substratplatte und/oder beheizbare Bauplatte und/oder einer Baufeldheizung. Die Baufeldheizung kann dabei beispielsweise in Form einer Strahlungsheizung oder eines IR-Strahlers oberhalb des Baufeldes angebracht sein.

Im Rahmen der vorliegenden Erfindung kann es darüber hinaus gleichermaßen vorgesehen sein, dass das erfindungsgemäße Verfahren in einer Schutzgas- und/oder Inertgasatmosphäre durchgeführt wird. Unter einem Inertgas ist dabei im Rahmen der vorliegenden Erfindung ein Gas zu verstehen, welches unter Verfahrensbedingungen nicht mit den verarbeitenden Materialien reagiert. Im Rahmen der vorliegenden Erfindung wird es bevorzugt, wenn das Schutzgas und/oder das Inertgas ausgewählt ist aus Stickstoff und/oder Edelgasen, insbesondere Argon und Xenon. Besonders gute Ergebnisse werden erhalten, wenn das Schutzgas und/oder Inertgas ausgewählt ist aus Stickstoff und/oder Argon, vorzugsweise Stickstoff ist. Durch die Durchführung des erfindungsgemäßen Verfahrens in einer Schutzgas- und/oder Inertgasatmosphäre lässt sich der thermisch-oxidative Abbau von Polymeren verlangsamen, so dass das erfindungsgemäße Verfahren bei höheren Temperaturen durchgeführt werden kann.

Besonders bevorzugt wird es in diesem Zusammenhang, wenn die Atmosphäre, in der das erfindungsgemäße Verfahren durchgeführt wird, weniger als 10 Vol.-%, vorzugsweise weniger als 5 Vol.-%, vorzugsweise weniger als 2 Vol.-% und besonders bevorzugt weniger als 1 Vol.-%, Sauerstoff aufweist. Gleichermaßen kann es vorgesehen sein, dass das erfindungsgemäße Verfahren in einer Atmosphäre mit einem Sauerstoffgehalt von 0,001 bis 10 Vol.-%, vorzugsweise 0,005 bis 5 Vol.-%, vorzugsweise 0,01 bis 2 Vol.-%, vorzugsweise 0,05 bis 1 Vol.-%, bezogen auf die Atmosphäre im Bauraum, durchgeführt wird.

Unter dem Bauraum ist im Rahmen der vorliegenden Erfindung der Teil einer Vorrichtung zu verstehen, in welcher die additive Fertigung durchgeführt wird.

Gemäß einer bevorzugten Ausführungsform der vorliegenden Erfindung wird vor Fertigung der dreidimensionalen Strukturen mindestens eine Grundkontaktfläche auf die Substratplatte, insbesondere die Oberfläche der Substratplatte, aufgebracht. Unter einer Grundkontaktfläche ist im Rahmen der vorliegenden Erfindung ein ebenes, insbesondere nahezu zweidimensionales, Objekt zu verstehen, welches zumindest bereichsweise auf die Substratplatte aufgebracht ist.

Die Grundkontaktfläche besteht dabei vorzugsweise aus dem gleichen Material wie die herzustellende dreidimensionalen Strukturen und wird im Zuge der additiven Fertigung oder unmittelbar vor Beginn der additiven Fertigung, jedoch vorzugsweise in der Vorrichtung zur Durchführung der additiven Fertigung, auf die Substratplatte aufgebracht.

In diesem Zusammenhang wurde es bevorzugt, wenn die Grundkontaktfläche eine zumindest 10 %, vorzugsweise mindestens 15 %, bevorzugt mindestens 20 % größere Fläche aufweist als die Projektion der herzustellenden dreidimensionalen Strukturen, insbesondere der Bauteile und Hilfsstrukturen, insbesondere Stützstrukturen und Ankerstrukturen, aufweist. Besonders gute Ergebnisse werden in diesem Zusammenhang erhalten, wenn die Grundkontaktfläche eine Fläche im Bereich von 110 bis 300 %, insbesondere 115 bis 250 %, vorzugsweise 120 bis 200 %, bezogen auf die Projektionsfläche der dreidimensionalen Strukturen auf die Substratfläche, aufweist.

Eine Grundkontaktfläche ermöglicht eine nochmals deutlich verbesserte Haftung der aufgebauten dreidimensionalen Strukturen an der Substratplatte, da die Fläche, mit welcher die dreidimensionalen Strukturen an der Substratplatte verankert bzw. verbunden sind, nochmals deutlich erhöht ist. Üblicherweise ist es im Rahmen der vorliegenden Erfindung vorgesehen, dass Grundkontaktfläche durch additive Fertigung auf die Substratplatte aufgebracht wird oder dass ein oder mehrere Lagen der pulverförmigen Zusammensetzung auf die Substratplatte aufgebracht und flächig verschmolzen und/oder versintert werden.

Im Rahmen der vorliegenden Erfindung ist es somit möglich, die Grundkontaktfläche unmittelbar in der additiven Fertigung zu generieren, d.h. die Grundkontaktfläche wird durch die wiederholte Auftragung von Pulverschichten und deren nachfolgende selektive Versinterung mittels eines Strahls elektromagnetischer Strahlung, insbesondere eines Laserstrahls, derart versintert, dass eine flächiges Objekt entsteht. Alternativ ist es auch möglich, eine oder mehrere Pulverschichten auf die Substratplatte aufzutragen bis eine gewünscht Dicke der pulverförmigen Zusammensetzung erreicht ist und die Pulverschicht anschließend mittels einer beheizbaren Substratplatte und/oder Bauplatte oder einer Baufeldheizung und/oder anderer geeigneter Heizeinrichtungen zu verschmelzen bzw. zu versintern.

Was nun die Dicke der Grundkontaktfläche anbelangt, so kann diese in weiten Bereichen variieren. Besonders gute Ergebnisse werden jedoch erhalten, wenn die Grundkontaktfläche eine Dicke von 0,1 bis 5 mm, vorzugsweise 0,2 bis 3 mm, vorzugsweise 0,2 bis 2 mm, bezogen auf die Oberfläche der Substratplatte aufweist. Unter der Oberfläche der Substratplatte dabei die Ebene, welche durch die höchsten Erhebungen auf der Substratplatte gebildet sind, gemeint. Durch die vorgenannten Dicken für die Grundkontaktfläche lässt sich einerseits eine hervorragende Haftung der dreidimensionalen Strukturen an einer Substratplatte, insbesondere der strukturierten Oberfläche einer Substratplatte erzielen, andererseits ist der Materialverbrauch gering, was insbesondere bei der Verwendung hochpreisiger Hochleistungspolymeren von Bedeutung ist.

Gemäß einer bevorzugten Ausführungsform der vorliegenden Erfindung ist das erfindungsgemäße Verfahren zur Herstellung dreidimensionaler Strukturen ein Verfahren zur Herstellung dreidimensionaler Strukturen mittels additiver Fertigung, insbesondere mittels Lasersinterns oder Laserschmelzens, wie zuvor beschrieben, wobei
(a) eine Substratplatte in einem ersten Verfahrensschritt eine Substratplatte mit einer strukturierten Oberfläche wie zuvor beschrieben vorgelegt wird,
(b) in einem nachfolgenden zweiten Verfahrensschritt eine Schicht einer pulverförmigen Zusammensetzung auf die Substratplatte aufgebracht wird und
(c) in einem auf den zweiten Verfahrensschritt (b) folgenden dritten Verfahrensschritt die Schicht der pulverförmigen Zusammensetzung selektiv und zumindest bereichsweise mit elektromagnetischer Strahlung, insbesondere Laserstrahlung, bestrahlt wird, so dass die im bestrahlten Bereich verschmelzen und/oder versintern und eine Lage einer dreidimensionalen Struktur erhalten wird,
wobei die Verfahrensschritte (b) und (c) sooft wiederholt werden, bis die gewünschten dreidimensionalen Objekte erhalten werden.
Auf diese bevorzugte Ausführungsform des erfindungsgemäßen Verfahrens lassen sich sämtliche zuvor genannten Besonderheiten, Vorteile und Merkmale des erfindungsgemäßen Verfahrens gleichermaßen lesen und anwenden.

Für weitergehende Einzelheiten zu dem erfindungsgemäßen Verfahren kann auf die obigen Ausführungen zu den übrigen Erfindungsaspekten verwiesen werden, welche im Bezug auf das erfindungsgemäße Verfahren entsprechend gelten.

Der Gegenstand der vorliegenden Erfindung wird nachfolgend beispielhaft anhand der Figurendarstellungen und der Ausführungsbeispiele in Form bevorzugter Ausführungsformen erläutert, ohne den Gegenstand der vorliegenden Erfindung jedoch hierauf zu beschränken.

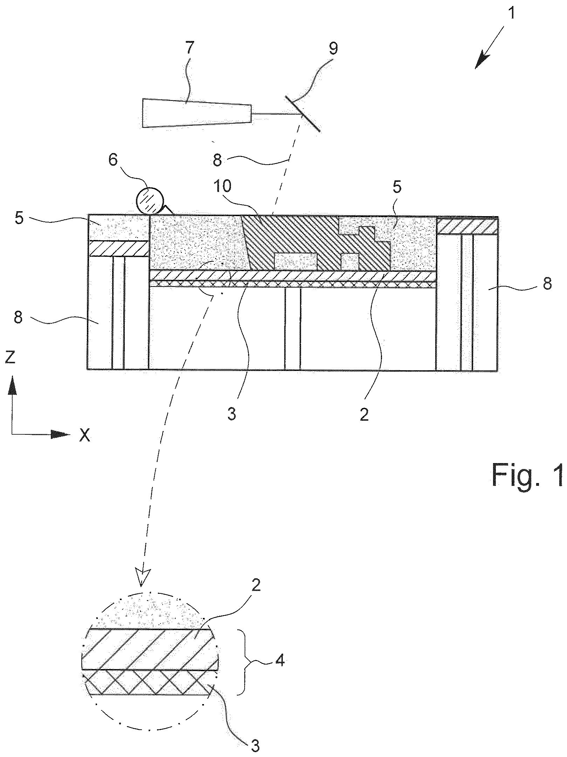

Es zeigt Figur 1 eine schematische Schnittdarstellung durch eine erfindungsgemäße Vorrichtung 1 zur Herstellung dreidimensionaler Strukturen aus pulverförmigen Ausgangsmaterialien durch selektive, d.h. ortsaufgelöste Bestrahlung mit elektromagnetischer Strahlung, insbesondere Laserstrahlung. Vorzugsweise ist die erfindungsgemäße Vorrichtung 1 eine Vorrichtung zum selektiven Lasersintern (SLS) oder zum selektiven Laserschmelzen (SLM), vorzugweise zum selektiven Lasersintern (SLS).

Die erfindungsgemäße Vorrichtung 1 ist insbesondere zur Durchführung generativer Fertigungsverfahren bzw. additiver Fertigungen in Form von Pulverbettverfahren ausgestaltet. Die Vorrichtung 1 weist eine Substratplatte 2 mit einer vorzugsweise dreidimensional strukturierten Oberfläche auf. Die Substratplatte 2 ist wie in der Figurendarstellung gezeigt vorzugsweise mit einer Grundplatte 3 verbunden, wobei die Verbindung direkt oder indirekt sein kann. Die Substratplatte 2 und die Grundplatte 3 bilden vorzugsweise eine Einheit in Form einer Bauplatte 4.

Die Substratplatte 2 und/oder die Grundplatte 3 und/oder die Bauplatte 4 können dabei einteilig oder mehrteilig ausgebildet sein. Insbesondere kann es vorgesehen sein, dass auf einer Grundplatte 3 mehrere Substratplatten 2 angeordnet sind, welche die Grundplatte 3 jeweils nur bereichsweise bedecken.

Vorzugsweise sind die Substratplatte 2 und/oder die Grundplatte 3 und/oder die Bauplatte 4 in z-Richtung verfahrbar. Die Fläche oberhalb der Substratplatte 2 und/oder Grundplatte 3 und/oder Bauplatte 4, welche in z-Richtung beweglich sind bzw. verfahrbar sind, bildet den Baubereich und die jeweils oberste Schicht dieses Baubereichs ist die Baufläche bzw. das Baufeld.

Vorzugsweise sind die Substratplatte 2 und/oder die Grundplatte 3 und/oder die Bauplatte 4 nivellierbar und zwar derart, dass die Oberfläche der Substratplatte planar und horizontal ausgerichtet werden kann.

In diesem Zusammenhang wird es besonders bevorzugt, wenn die Oberfläche der Substratplatte 3 im Hinblick auf eine darauf aufzutragende Ebene der pulverförmigen Zusammensetzung eine Ebenheitstoleranz über die gesamte Bauebene von kleiner als 1 mm, vorzugsweise kleiner als 0,1 mm und besonders bevorzugt kleiner als 0,05 mm, aufweist.

Die Oberfläche der Substratplatte 2 ist wie zuvor bereits ausgeführt dreidimensional strukturiert, d.h. sie weist Erhebungen und Vertiefungen auf. Insbesondere werden die dreidimensionalen Strukturen durch Rippen, Streben und/oder Spitzen bzw. durch Aussparungen, Hohlräume und/oder Zwischenräume gebildet sind, so dass eine dreidimensional strukturierte Oberfläche entsteht. Vorzugsweise weist die Oberfläche der Substratplatte 2 eine Profiltiefe, d.h. einen Unterschied zwischen den Erhebungen und Vertiefungen von mehr als 0,5 mm und weniger als 2 mm auf.

Gleichermaßen kann es vorgesehen sein, dass die Hohlräume, Aussparungen und/oder Zwischenräume zwischen mit Material gefüllten Bereichen eine Ausdehnung von 0,001 bis 10 mm, insbesondere 0,002 bis 5 mm, vorzugsweise 0,005 bis 2 mm aufweisen. Die mit Material gefüllten dreidimensionalen Strukturen zwischen den einzelnen Aussparungen, Zwischenräumen und Hohlräumen haben üblicherweise eine Dicke entlang der Hauptausdehnungsrichtungen der Substratplatte 2 von 0,001 bis 10 mm, vorzugsweise 0,05 bis 5 mm, bevorzugt 0,5 bis 1 mm.

Im Rahmen der vorliegenden Erfindung ist es darüber hinaus üblicherweise vorgesehen, dass die Substratplatte 2 beheizbar ausgebildet ist. Dies kann entweder durch eine direkte Beheizung der Substratplatte 2, beispielsweise über Heizspiralen erfolgen, oder über eine indirekt Beheizung über die Grundplatte 3, was bevorzugt ist. Die Substratplatte 2 und/oder die Grundplatte 3 sind vorzugsweise aus einem Material gefertigt, welches einen höheren Schmelzpunkt als das pulverförmige Material 5 aufweist bzw. welches über eine ausreichende Wärmeleitfähigkeit verfügt, um eine effiziente Beheizung der Substratplatte zu gewährleisten. Vorzugsweise bestehen die Substratplatte 2 und/oder die Grundplatte 3 aus einem Metall oder aus einem Kunststoff, welcher 10 bis 90 Gew.% an Metalloxiden, Metallnitriden oder Siliciumkarbid aufweist.

Wie zuvor bereits dargelegt, ist die Oberfläche der Substratplatte 3 nivellierbar, wobei es entweder vorgesehen sein kann, dass die Oberfläche der Substratplatte 2 über die Bauplatte 4, d.h. über die Grundplatte 3 nivellierbar ist oder dass die Oberfläche der Substratplatte 2 über die Substratplatte 2 nivellierbar ist, indem die Substratplatte 2 gegenüber der Grundplatte 3 nivellierbar ist.

Bevorzugt wird es im Rahmen der vorliegenden Erfindung, wenn die Substratplatte 2 gegenüber der Grundplatte 3 nivellierbar ist und/oder wenn sowohl die Grundplatte 3 als auch die Substratplatte 2 nivellierbar sind. Um eine Grobnivellierung vorzunehmen, kann es dabei vorgesehen sein, dass die Substratplatte 2 und/oder die Grundplatte 3 und/oder die Bauplatte 4 in ihrer Neigung gegenüber einem Material auftragenden Mechanismus, insbesondere einer Verteilungseinrichtung 6, einstellbar sind. Vorzugsweise erfolgt diese Nivellierung bzw. Neigungseinstellung über die Grundplatte 3 bzw. die Bauplatte 4 insgesamt. Auf diese Weise wird eine Vorjustierung der Substratplatte 2 und/oder Grundplatte 3 und/oder der Bauplatte 4 erreicht und durch eine nachfolgende Nivellierung der Substratplatte 2 gegenüber der Grundplatte 3 können kleinere Unebenheiten, welche beim Aufheizen der Substratplatte 2 entstehen, ausgeglichen, werden.

Im Rahmen der vorliegenden Erfindung ist es darüber hinaus bevorzugt, wenn die Substratplatte 2 in der Vorrichtung auch in x- und/oder y-Richtung beweglich ist bzw. aus der Vorrichtung 1 entnommen werden kann. Dies kann beispielsweise entweder derart geschehen, dass allein die Substratplatte 2 aus der Vorrichtung 1 entnommen werden kann oder dass die gesamte Bauplatte 4 aus der Vorrichtung 1 entnommen werden kann, wobei eine Entfernung der gesamten Bauplatte 4 bevorzugt wird. Darüber hinaus können beispielsweise an der Grundplatte 3 der Bauplatte 4 in der Figurendarstellung nicht gezeigte Befestigungseinrichtungen insbesondere Schnellspannmodule bzw. Schnellfixierungsmodule, vorgesehen sein, welche eine schnelle Entnahme bzw. Fixierung der Grundplatte 3 und somit der Bauplatte 4 aus bzw. in der Vorrichtung 1 gewährleisten. Vorzugsweise lässt sich über diese Befestigungseinrichtung auch die Neigung der Bauplatte 4 bzw. der Grundplatte 3 und somit letztlich auch der Substratplatte 2 gegenüber dem materialauftragenden Mechanismus einstellen.

Die Vorrichtung 1 verfügt weiterhin über einen materialauftragende Mechanismus, insbesondere eine Verteilungseinrichtung 6, welche eine Lage des pulverförmigen Materials 5 auf dem Baufeld auftragen kann. Im vorliegenden Fall besteht die Verteilungseinrichtung aus einem Roller, welcher die pulverförmige Zusammensetzung 5 gleichmäßig in einer Ebene auf dem Baufeld verteilt, wobei die pulverförmige Zusammensetzung aus Reservoiren 7 bereitgestellt bzw. überschüssiges Material in diese zurückgeführt wird.

Die Vorrichtung 1 verfügt ferner über eine Quelle elektromagnetischer Strahlung, insbesondere eine Laserstrahlungseinrichtung 7, welche elektromagnetische Strahlen, insbesondere Laserstrahlen 8 erzeugen kann. Mit Hilfe der Laserstrahlen 8 kann jede Stelle des Baufeldes, insbesondere der Substratplatte 2 ortselektiv bestrahlt werden. Dies kann beispielsweise durch eine bewegliche bzw. verfahrbare Laserstrahlungseinrichtung 7 erfolgen oder beispielsweise durch Ablenkungseinrichtungen für Laserstrahlen, beispielsweise eine Spiegelanordnung 9, erfolgen.

Nachfolgend wird das erfindungsgemäße Verfahren anhand der Figurendarstellung erläutert. Zu Beginn der Verfahrens wird vorzugsweise die Bauplatte 4, welche die Grundplatte 3 und die Substratplatte 2 mit einer dreidimensional strukturierten Oberfläche aufweist, mittels Befestigungseinrichtungen in der Vorrichtung 1 fixiert und nivilliert d.h. die Neigung der Bauplatte 4 und insbesondere der Substratplatte 2 gegenüber dem materialauftragenden Mechanismus, insbesondere der Verteilungseinrichtung 7, wird eingestellt. Anschließend wird die Substratplatte 2 vorzugsweise indirekt über die Grundplatte 3 beheizt auf Temperaturen weit unterhalb der Rekristallisationstemperatur des pulverförmigen Materials 5.

Das Material 5 kann entweder ein Metallpulver sein, ist vorzugsweise jedoch ein thermoplastisches Hochleistungspolymer. Üblicherweise liegen die Temperaturen, auf welche die Substratplatte aufgeheizt wird oberhalb der Glasübergangstemperatur des zu verarbeitenden Kunststoffmaterials aber unterhalb der Rekristallisationstemperatur des Kunststoffmaterials und vorzugsweise unterhalb der Zersetzungstemperatur, d.h. der Temperaturen, bei welcher bereits ein thermischer oder thermisch-oxidativer Abbau des polymeren Materials erfolgt. Im Allgemeinen wird die Substratplatte 2 auf Temperaturen im Bereich von 170 bis 250°C aufgeheizt. Anschließend wird mittels der Verteilungseinrichtung 6 eine homogene gleichmäßige Schicht eines pulverförmigen Materials 5, insbesondere des Pulvers, aus einem thermoplastischen Hochleistungspolymer, auf die Oberfläche der Substratplatte 2 aufgebracht, wobei die pulverförmige Zusammensetzung aus dem Reservoir 7 bereitgestellt wird und überschüssiges Material 5 in einem weiteren Reservoir 7 aufgenommen wird. Die Reservoire 7 sind zu Aufnahme und Abgabe der pulverförmigen Zusammensetzung 5 ausgebildet. In der Figurendarstellung ist dies durch in z-Richtung bewegliche Kolben dargestellt.

Anschließend werden über die Laserstrahlungseinrichtung 7 Laserstrahlen 8 erzeugt, welche ortselektiv auf die Pulverschicht einwirken, wodurch die pulverförmige Zusammensetzung im bestrahlten Bereich versintert und/oder verschmilzt. Anschließend wird eine weitere Schicht der pulverförmigen Zusammensetzung mittels der Verteilungseinrichtung 7 aufgebracht und anschließend wiederrum mittels Laserstrahlen 8 ortsselektiv versintert, so dass nach und nach dreidimensionale Strukturen 10 aufgebaut werden.

Die zuvor beschriebenen Verfahrensschritte werden solange wiederholt, bis schließlich die dreidimensionale Struktur 10 erhalten wird.

Im Rahmen der vorliegenden Erfindung kann es dabei vorzugsweise auch vorgesehen sein, dass auf der Oberfläche der Substratplatte 2 nicht nur dreidimensionale Objekte 10 aufgebaut werden, insbesondere Bauteile und Hilfsstrukturen, wie Anker- und Stützstrukturen, sondern zuerst eine Grundkontaktfläche für die zu generierende dreidimensionale Strukturen auf der Oberfläche der Substratplatte erschaffen wird, welche eine mindestens 10 % größere Fläche auf der Substratplatte 2 aufweist als die Projektionsfläche der dreidimensionalen Strukturen auf die Substratplatte. Vorzugsweise weist die Grundkontaktfläche eine um 10 bis 200 % größere Fläche auf der Substratplatte auf als die Projektion der dreidimensionalen Strukturen, d.h. der Bauteile und Hilfsstrukturen, auf die Substratplatte.

Die Grundkontaktfläche ermöglicht eine nochmals verbesserte Haftung der dreidimensionalen Strukturen an der Substratplatte. Die Grundkontaktfläche besitzt üblicherweise eine Höhe gegenüber der Oberfläche der Substratfläche im Bereich von 0,01 bis 5 mm, vorzugsweise 0,1 bis 2 mm, und kann entweder im Zuge der additiven Fertigung, d.h. durch selektive Belichtung mit Laserstrahlen 8 erzeugt werden oder durch Auftrag einer oder mehrerer Schichten des pulverförmigen Materials 5 auf die Substratplatte 2 und anschließendes großflächiges Verschmelzen bzw. Versintern der pulverförmigen Zusammensetzung über die beheizbare Substratplatte 2 und/oder eine Baufeldheizung, wie beispielsweise ein Strahlungsheizung oder einen IR-Strahler, oder andere geeignete Heizeinrichtungen. Wenn die Grundkontaktfläche mittels der additiven Fertigung hergestellt wird, beträgt der Abstand einzelner Linien, welche im Rahmen der Bestrahlung abgefahren werden jeweils 0,005 mm bis 2 mm, bevorzugt 0,008 mm bis 0,05 mm, wobei der Querschnitt des Laserstrahls im Bereich von 100 µm bis 3 mm liegt. Durch die Herstellung einer Grundkontaktfläche wird eine nochmals deutlich verbesserte Haftung und damit Formstabilität der Bauteile an der Substratplatte ermöglicht. Darüber hinaus ermöglicht die Grundkontaktfläche und die stabile Verbindung von Hilfsstrukturen mit der Substratplatte, was insbesondere Herstellen von dreidimensionalen Strukturen 10 in mehreren Ebenen ermöglicht.

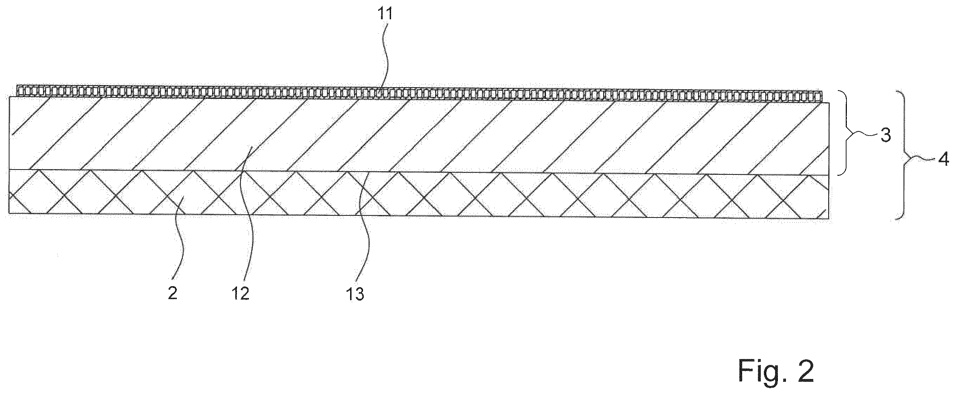

Es zeigt Figur 2 eine bevorzugte Ausführungsform der erfindungsgemäßen Bauplatte 4, welche eine Substratplatte 2 und eine Grundplatte 3 aufweist. Bei der in Figur 2 dargestellten Ausführungsform ist die strukturierte Oberfläche der Substratplatte 2 in Form einer Oberflächenschicht 11 dargestellt, welche aus Bogen- und Lochstrukturen besteht und auf den Grundkörper 12 der Substratplatte 2 aufgebracht ist. Die Oberflächenschicht 11 kann dabei entweder durch materialabtragende Verfahren oder vorzugsweise durch ein additives Fertigungsverfahren auf den Grundkörper 12 der Substratplatte 2 aufgetragen werden. Die Oberflächenschicht 11 kann dabei entweder aus dem gleichen Material bestehen wie die Substratplatte 2 oder aus einem anderen Material. Vorzugsweise besteht die Oberflächenschicht 11 aus dem gleichen Material wie die Substratplatte 2. Darüber hinaus kann es gleichfalls vorgesehen sein, dass zwischen der Substratplatte 2 und der Grundplatte 3 eine Zwischenschicht 13, insbesondere eine wärmeleitende Zwischenschicht 13 angeordnet ist. Die Zwischenschicht 13 kann dabei beispielsweise durch eine Wärmeleitpaste oder durch eine wärmeleitende Folie gebildet sein.

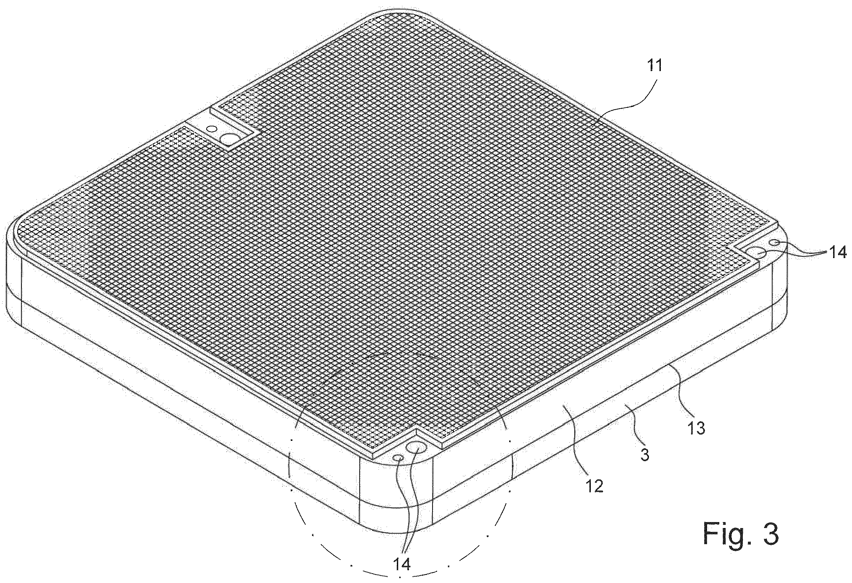

Figur 3 zeigt eine perspektivische Darstellung der erfindungsgemäßen Bauplatte 4, welche eine Substratplatte 2 mit einer Oberflächenschicht 11 und einen Grundkörper 12 und einer Grundplatte 3 aufweist, welche über Befestigungs- und Nivelliereinrichtungen 14 miteinander verbunden sind. Die Befestigungs- und/oder Nivelliereinrichtungen 14 ermöglicht zum einen eine direkte oder indirekt Befestigung der Substratplatte 2 an der Grundplatte 3 und darüber hinaus auch eine Nivellierung der Oberfläche der Substratplatte 2 gegenüber der Grundplatte 3 nachdem die Substratplatte aufgeheizt ist. Es können jedoch auch separate Befestigungseinrichtungen und Nivelliereinrichtungen verwendet werden.

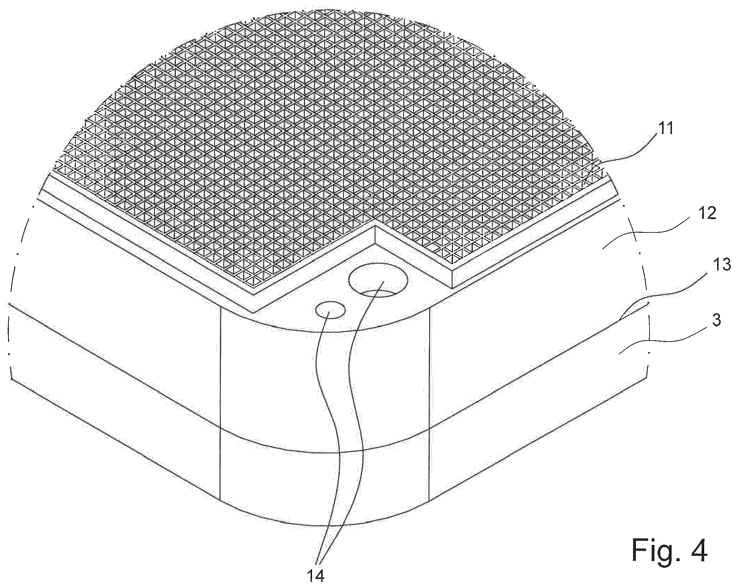

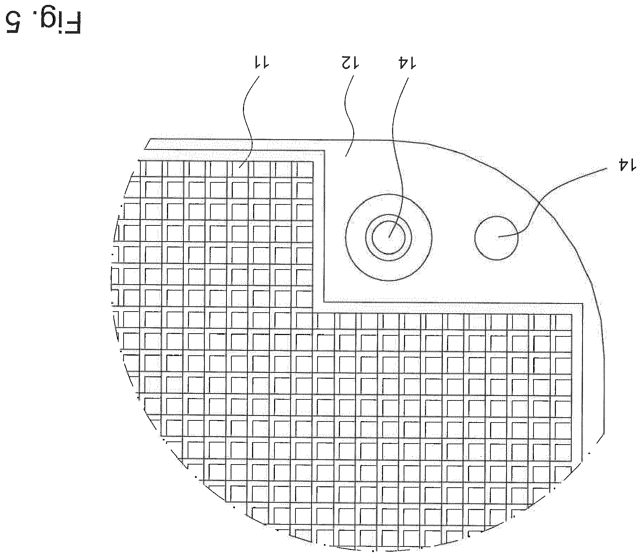

Die Figuren 4 und 5 zeigen jeweils Detailansichten der Bauplatte 4 und insbesondere der Befestigungs- und Nivelliereinrichtungen 14.

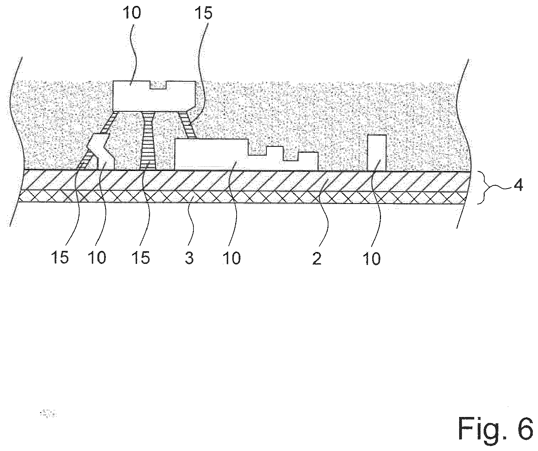

Figur 6 zeigt weiterhin einen Schnitt entlang einer xz-Ebene durch dasBaufeld einer erfindungsgemäßen Vorrichtung 1 mit einer Bauplatte 4, auf welcher mittels selektiven Lasersinterns dreidimensionaler Strukturen 10 in mehreren Ebenen aufgebaut wurden. Die Strukturen werden durch Hilfsstrukturen 15, insbesondere Anker- und/oder Stützstrukturen, stabilisiert, so dass zum einen ein Aufbau von Objekten in mehreren Ebenen möglich ist und zum anderen das erfindungsgemäße Verfahren weit unterhalb der Rekristallisationstemperatur von Kunststoffmaterialien durchgeführt werden kann.

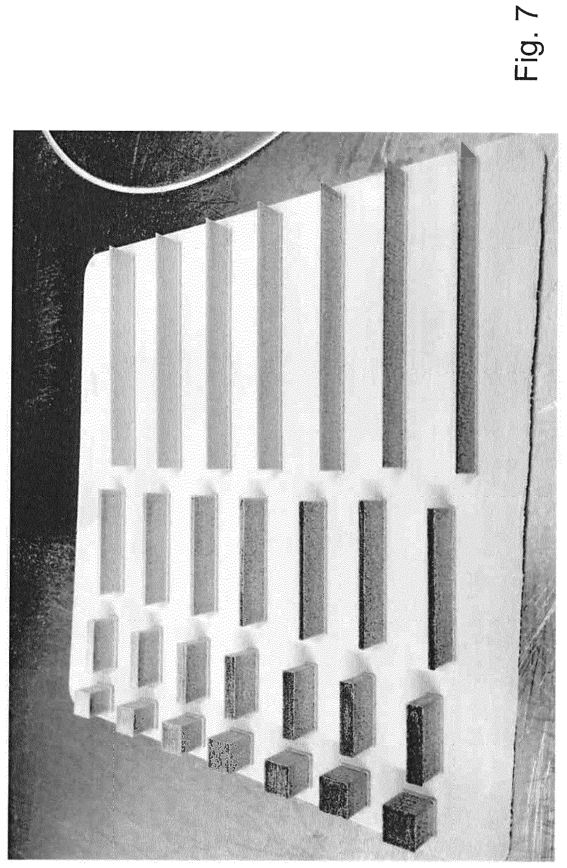

Es zeigt Figur 7 schließlich das Ergebnis eines mit dem erfindungsgemäßen Verfahren durchgeführten Bauprozesses, bei welchem Würfel und Quader aus Polyetherketonketon (PEKK), hergestellt wurden. Die Abbildung zeigt die von der Substratplatte 2 abgelöste Grundkontaktfläche mit den darauf aufgebauten dreidimensionalen Strukturen. Am Fuße der jeweiligen Strukturen sind Stützstrukturen zu erkennen, welche die Formstabilität der Würfel und Quader verbessert. Es ist gut zu erkennen, dass sämtliche Strukturen während des Bauprozesses an der Substratplatte 2 haften geblieben sind und regelmäßige Würfel und Quader, welche formstabil sind erhalten wurden.

### Bezugszeichenliste:

- 1: Vorrichtung
- 2: Substratplatte
- 3: Grundplatte
- 4: Bauplatte
- 5: pulverförmige Zusammensetzung
- 6: Verteilungseinrichtung
- 7: Laserstrahlungseinrichtung
- 8: Laserstrahlen
- 9: Spiegelanordnung
- 10: dreidimensionale Struktur
- 11: Oberflächenschicht
- 12: Grundkörper
- 13: Zwischenschicht
- 14: Befestigungs- und/oder Nivelliereinrichtung
- 15: Hilfsstrukturen

## Patentansprüche

1. Substratplatte (2) zur Verwendung in der additiven Fertigung
**dadurch gekennzeichnet,**
**dass** die Oberfläche der Substratplatte, auf welcher ein Bauteil (10) aufgebaut wird, insbesondere zumindest bereichsweise strukturiert ist.

2. Substratplatte (2) nach Anspruch 1, **dadurch gekennzeichnet, dass** die Oberfläche der Substratplatte (2) dreidimensional strukturiert ist.

3. Substratplatte (2) nach Anspruch 1 oder 2, **dadurch gekennzeichnet, dass** die Strukturen durch Erhebungen und/oder Vertiefungen, insbesondere Aussparungen, Löcher, Bögen, Rippen und/oder Spitzen, gebildet sind.

4. Substratplatte (2) nach einem der vorangehenden Ansprüche, **dadurch gekennzeichnet, dass** die dreidimensionalen Strukturen eine Höhe im Bereich von 0,05 bis 20 mm, insbesondere 0,1 bis 10 mm, vorzugsweise 0,2 bis 5 mm, bevorzugt 0,5 bis 2 mm, aufweisen.

5. Substratplatte (2) nach einem der vorangehenden Ansprüche, **dadurch gekennzeichnet, dass** die Substratplatte (2) beheizbar ist.

6. Substratplatte (2) nach Anspruch 5, **dadurch gekennzeichnet, dass** die Substratplatte (2) direkt und/oder indirekt beheizbar ist, vorzugsweise indirekt beheizbar ist.

7. Substratplatte (2) nach einem der vorangehenden Ansprüche, **dadurch gekennzeichnet, dass** die Oberfläche der Substratplatte (2) beschichtet ist.

8. Verwendung einer Substratplatte (2) nach einem der Ansprüche 1 bis 7 in einem generativen Fertigungsverfahren, insbesondere einem Pulverbettverfahren.

9. Bauplatte (4), aufweisend mindestens eine Substratplatte (2) nach einem der Ansprüche 1 bis 7 und mindestens eine Grundplatte (3).

10. Bauplatte (4) nach Anspruch 9, **dadurch gekennzeichnet, dass** Substratplatte (2) und die Grundplatte (3) direkt oder indirekt, vorzugsweise indirekt, miteinander verbunden sind.

11. Bauplatte (4) nach Anspruch 9 oder 10, **dadurch gekennzeichnet, dass** die Substratplatte (2) über die Grundplatte (3) beheizbar ist.

12. Verwendung einer Bauplatte (4) nach einem der Ansprüche 9 bis 11 in einem generativen Fertigungsverfahren, insbesondere einem Pulverbettverfahren.

13. Grundplatte (3) nach einem der Ansprüche 9 bis 11.

14. Vorrichtung (1) zur additiven Fertigung von dreidimensionalen Strukturen (10) aus Metall oder Kunststoff, vorzugsweise Kunststoff, mittels Lasersinterns oder Laserschmelzens, aufweisend ein vorzugsweise beheizbares Baufeld
**dadurch gekennzeichnet,**
**dass** die Vorrichtung (1) weiterhin
mindestens eine Substratplatte (2) nach einem der Ansprüche 1 bis 8 und/oder
mindestens eine Grundplatte (3) nach Anspruch 32 und/oder mindestens eine Bauplatte (4) nach einem der Ansprüche 18 bis 31 aufweist, wobei die Substratplatte (2) und/oder die Grundplatte (3) und/oder die Bauplatte (4) in z-Richtung bewegbar ist.

15. Verfahren zur Herstellung dreidimensionaler Strukturen mittels additiver Fertigung, insbesondere mittels Lasersinterns oder Laserschmelzens,
**dadurch gekennzeichnet,**
**dass** die dreidimensionalen Strukturen aus einer pulverförmigen Zusammensetzung auf einer Substratplatte (2) mit einer strukturierten Oberfläche nach einem Ansprüche 1 bis 8 hergestellt werden.

16. Verfahren nach Anspruch 15, **dadurch gekennzeichnet, dass** die pulverförmigen Zusammensetzung ein Polymerpulver, ein Metallpulver oder ein Präkusorpulver ist.

17. Verfahren nach Anspruch 15 oder 16, **dadurch gekennzeichnet, dass** das Polymerpulver ausgewählt ist aus der Gruppe von Polyaryletherketon (PAEK), Polyetheretherketon (PEEK), Polyetherketonketon (PEKK), Polyetherimiden (PEI), Acrylnitril-Butadien-Styrol (ABS), Polyamiden (PA), Polyphenylsulfonen (PPS), Polysulfon (PS), Polyethersulfon (PES) und Polyamid-Imiden (PAI), vorzugsweise Polyaryletherketon (PAEK), Polyetheretherketon (PEEK), Polyetherketonketon (PEKK), Polyetherimiden (PEI), Acrylnitril-Butadien-Styrol (ABS), Polyphenylsulfonen (PPS) und Polyamid-Imiden (PAI).

18. Verfahren nach einem der Ansprüche 15 bis 17, **dadurch gekennzeichnet, dass** mittels der additiven Fertigung zusätzlich Ankerstrukturen und/oder Hilfsstrukturen erzeugt werden.

19. Verfahren nach einem der Ansprüche 15 bis 18, **dadurch gekennzeichnet, dass** dreidimensionale Strukturen in mehreren Ebenen hergestellt werden, insbesondere unter Verwendung von Ankerstrukturen und/oder Hilfsstrukturen.
